(19) Europäisches Patentamt / European Patent Office / Office européen des brevets

(11) EP 3 943 190 A1

(12) **EUROPEAN PATENT APPLICATION**

(43) Date of publication:
**26.01.2022 Bulletin 2022/04**

(21) Application number: **20382665.6**

(22) Date of filing: **24.07.2020**

(51) International Patent Classification (IPC):
***B01J 31/18*** *(2006.01)* ***B01J 31/22*** *(2006.01)*
***B01J 21/18*** *(2006.01)* ***B01J 23/14*** *(2006.01)*
***B01J 37/02*** *(2006.01)* ***C01B 3/04*** *(2006.01)*

(52) Cooperative Patent Classification (CPC):
**B01J 31/1616; B01J 21/185; B01J 23/14; B01J 31/1691; B01J 31/1815; B01J 31/183; B01J 31/2243; B01J 37/0219; B01J 37/0221; C25B 1/04; C25B 1/55;** B01J 2531/0216; B01J 2531/0244; B01J 2531/821

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Fundació Privada Institut Català d'Investigació Química (ICIQ)**
**43007 Tarragona (ES)**

(72) Inventor: **Llobet Dalmases, Antoni**
**08460 Santa María de Palautordera (ES)**

(54) **CATALYST ANCHORING METHOD, OLIGOMERIC RUTHENIUM-LIGAND COMPOSITIONS THEREFROM AND THEIR USE IN WATER OXIDATION**

(57) The present invention relates to a method for the preparation of a solid-supported catalyst wherein a catalytically active material is anchored on a surface of a solid material, wherein the catalytically active material comprises a plurality of moieties comprising a catalytically active metal coordination complex comprising a ligand arranged for interacting with the surface of a solid material through non-covalent interactions. The invention also relates to compounds useful in said method, compositions therefrom, an electrode therefrom and a device comprising such electrode. The invention also relates to a high yielding process for water oxidation taking place at neutral pH using an electrode according to the invention. The support preferably comprises carbon nanotubes and the preferred compounds are oligomeric Ru complexes, with L1= 4,4'-bipyridine or 1,4-di(pyridin-3-yl)benzene as bridging ligands and L2= 2,2'-bipyridine-6,6'--dicarboxylate (bda) or [2,2′:6′,2″-terpyridine]-6,6″-dicarboxylate (tda) as chelating ligands.

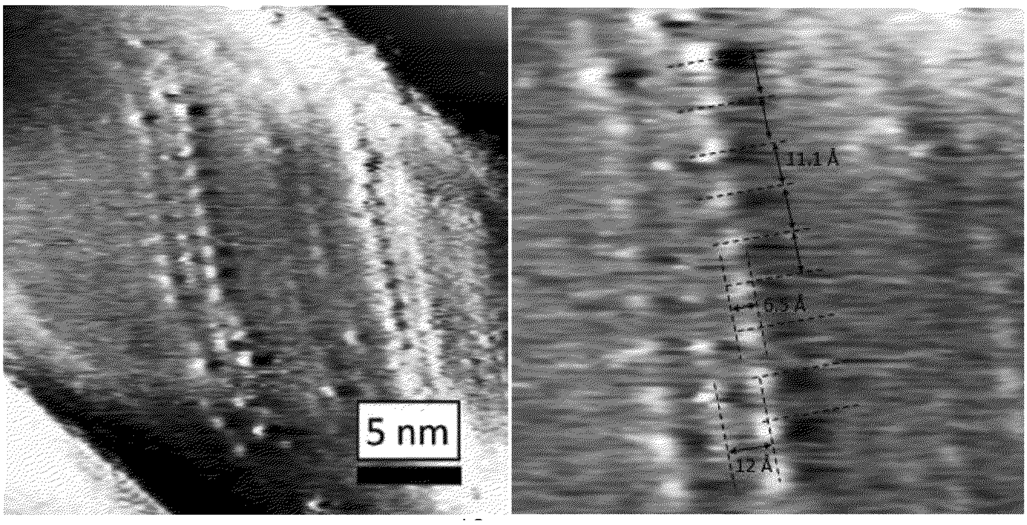


FIG. 2

EP 3 943 190 A1

Printed by Jouve, 75001 PARIS (FR)

## Description

The present invention relates to a method for the preparation of a solid-supported catalyst wherein a catalytically active material is anchored on a surface of a solid material, and wherein the catalytically active material comprises a plurality of moieties comprising a catalytically active metal coordination complex comprising a ligand arranged for interacting with the surface of a solid material through non-covalent interactions. The invention also relates to compounds useful in said method, compositions therefrom, an electrode therefrom and a device comprising such electrode. The invention also relates to a high yielding process for water oxidation taking place at neutral pH using an electrode according to the invention.

## BACKGROUND ART

Heterogeneous catalysts are known in the art and typically include several types of inorganic compounds. When used in the promotion of chemical transformations, heterogeneous catalysts present the advantage of being easy to recover from the reaction mixture by solid-liquid separation techniques or solid-gas separation techniques. These catalysts are thus easily re-used in the chemical process. The scope of achievable transformations with heterogeneous catalysis is however limited. The reactivity and selectivity of heterogeneous catalyst systems is difficult to control, as it is often influenced by a large number of parameters in the catalyst preparation process. In contrast to this, homogenous catalysts based on metal coordination complexes offer a broader range of versatility in terms of reactivity and selectivity in the reaction. Chemical modification of the electronic or structural properties of a ligand allow fine-tuning the reactivity of the metal center in an easier manner, which allows reaching more versatile reactivity. Nevertheless, homogeneous catalysts are typically difficult to separate from the reaction mixture and to recycle or re-use in further transformations. It is therefore desirable to provide methods suitable for anchoring homogeneous catalytic systems onto solid surfaces in order to combine the advantages of both homogeneous and heterogeneous catalysts.

Several strategies have been reported in the art for anchoring molecular catalytic systems on the surface of solid materials. One approach relies on the use of covalent or coordination bonds between a polymer support having a functional group in a repeating unit of the polymer chain suitable for forming a covalent or coordination bond with the catalytically active species. Such an approach typically requires a long synthetic process and provides a polymeric catalyst with a loading of active sites that depends on the degree of functionalization of the polymer chain. Alternatively, co-polymerization of a ligand functionalized with a polymerizable double bond has been reported. However, such systems require the use of specific types of polymers whose polymer chains uncoil or swell in the conditions of the reaction in order to facilitate the access of the substrate of the reaction to the active sites. Another reported approach consists in using non-covalent interactions between a solid support, such as metal oxides or carbon nanotubes, and a ligand attached to the catalytically active metal, said ligand being functionalized with a group suitable for interacting with this surface through interactions such as $\pi$-$\pi$ stacking, metal-anion, interactions, anion-$\pi$ interactions. In this latter approach, the anchoring is typically a weak interaction, which often causes instability of the anchored catalyst and leaching. This approach also does not allow to control the loading of the catalyst over the surface.

More particularly, molecular homogeneous electrocatalysts are also known in the art. These catalysts are typically metal coordination complexes of RedOx active transition metals that are dissolved in a medium wherein an electrode is immerged. Electrons are exchanged between the electrode and the electrocatalyst thanks to an electrolyte comprised in the medium. The activity and performance molecular electrocatalysts can advantageously be controlled thanks to the synthetic versatility of molecular transition metal complexes where the first and second coordination sphere of the metal center can be tuned so that it can exert supramolecular interactions, hydrogen bonding effects, and local acid-based enhancements among others. Examples of such molecular electrocatalysts for water oxidation have been reviewed by Matheu and co-workers (Chem. Rev. 2019, 119, 3453-3471. Despite their performance and versatile and modular properties, the generation of electroanodes and cathodes for electrocatalytic processes based on molecular complexes anchored onto solid surfaces has received far less attention than conventional non-molecular materials, such as metal oxides or phosphides. Methods for anchoring such catalysts on a solid support are highly desirable in order to transfer the properties of such materials to an electrode.

Several strategies have been reported in the art for anchoring a molecular electrocatalyst onto an electrode surface such as a carbonaceous material or metal oxides. Said strategies typically rely on arranging the ligand in the metal coordination complex for interacting with the surface through non-covalent interactions including $\pi$-$\pi$ stacking interactions when the surface is a carbonaceous material or anion-metal interactions when the surface is a metal oxide. For instance, Chen and co-workers (J. Am. Chem. Soc. 2009, 131, 15580-15581) have reported a molecular electrocatalyst for water oxidation consisting of a coordination complex comprising one ruthenium atom coordinated to a bipyridine ligand functionalized with phosphonate groups so as to interact with a metal oxide surface (FTO). While it is concluded that the efficiency of the catalyst is preserved when supported on the surface, the loading of active sites on the catalyst remains moderate. A turnover rate of 0,004 $s^{-1}$ was reported for this supported catalyst. An alternative

strategy consists in arranging the surface for being attached to a metal coordination complex, as exemplified by Jackson and co-workers (J. Am. Chem. Soc. 2018, 140, 1004-1010). In some of these cases, the performance of the supported electrocatalyst is preserved but the resulting electrocatalytic system, as a whole, suffers from a poor loading of catalyst on the surface of the electrode and/or instability of the catalyst, which results in low or moderate electrocatalytic efficiency.

Francàs et al. (Chem. Eur. J. 2016, 22, 5261 - 5268) have reported three electrocatalytically active materials wherein at least a portion of a ligand was functionalized with oxoanions such as carboxylate, phosphonate or sulfonate, so that said ligands are arranged to interact with metal oxides through metal-anion interactions. Two geometries of metal coordination complexes are disclosed. The authors conclude that such non covalent interaction is too weak and produces some leaching of the catalyst from the surface, thereby leading to an instable electrode. It is also concluded that the performance of the catalyst benefits from a configuration wherein the active site of the electrocatalytically active metal coordination complex is not facing the surface of the material, while the performance of the catalyst is significantly decreased when the active site of the electrocatalytically active metal coordination complex is facing the surface of the material.

Creus and co-workers (Angew. Chem. Int. Ed. 2016, 55, 15382 -15386) have reported a method to anchor a highly performant molecular water oxidation catalyst comprising one ruthenium atom coordinated to [2,2':6',2"-terpyridine]-6,6"-dicarboxylate (tda). The anchoring of the molecular electrocatalyst is achieved through the use of a metal coordinating pyridine ligand attached to a moiety comprising a pyrenyl group suitable for interacting with a carbonaceous material through $\pi$-$\pi$ non-covalent interactions. When coordinated to a pyrenyl-functionalized ligand, a [Ru(tda)] complex can adhere to the surface a carbonaceous material such as Multi-Wall Carbon Nanotubes (MWCNTs) through $\pi$-$\pi$ non-covalent interactions. This property was used to successfully anchor the [Ru(tda)] complex on MWCNT, thus producing an ink that was further deposited on an electrode support (glassy carbon). The electrode thus prepared maintained the performance of the non-supported molecular [Ru(tda)] complex, allowing to reach a turnover frequency of up to 8900 $s^{-1}$ at neutral pH in the water oxidation reaction and exhibited good stability over time, allowing to reach a number of turnovers of 1 million. Modest current densities have however been achieved with such molecular anodes in the range of 10 $mA/cm^2$ at pH 7 with an overpotential of about 400 mV at the foot of the catalytic wave.

Schulze and co-workers have reported a trinuclear macrocyclic compound of formula $[Ru(bda)L]_3$, wherein (bda) refers to [2,2'-bipyridine]-6,6'-dicarboxylate and L is 1,4-di(pyridin-3-yl)benzene. Such a macrocycle exhibits high efficiency for water oxidation when used as molecular catalyst. The authors are however silent about the anchoring of this catalyst on a surface.

From what is known in the art, it derives that there is still a need for providing methods suitable for anchoring catalytically active materials onto the surface of solid supports providing improved catalysts with, inter alia, higher efficiency and turnover numbers.

## SUMMARY OF THE INVENTION

After intensive research, the inventors have developed a method for the preparation of a catalytically active compound supported onto the surface of a solid material. The method comprises the step (a) of providing a solution comprising a catalytically active compound or a precursor thereof which comprises in its molecular formula a plurality of catalytically active metal coordination complexes, or precursors thereof. According to the invention, each catalytically active metal coordination complex, or a precursor thereof in the compound of step (a) comprises a ligand that is arranged to interact with the surface of a solid material of an electrode, such as a carbonaceous material or metal oxides, through non-covalent interactions, such as C-H-$\pi$ interactions, in such a manner that substantially all the active sites in the metal coordination complexes interacting with the surface are not facing the surface of the solid material.

Thus, the catalytically active compound or the precursor thereof provided in step (a) of the method of the invention comprises a plurality of ligands attached to a catalytically active metal and arranged to interact with the surface of a solid material in the manner described above. The provision of such a catalytically active compound, or a precursor thereof, presents several advantages. In the first place, the interaction between the molecular metal coordination complexes and the surface of the solid material is stronger than in the methods described in the art, which results in an increased stability of the anchored catalyst and decreased risk of catalyst leaching. Without being bound to theory, it is believed that this stronger interaction is attributed to the fact that the plurality of interactions between each ligand and the surface of the material (enthalpy contribution) sums up in a cooperative manner to overcome the entropic penalty to be paid to approach both components and which would cause the detachment of the anchored complex, as frequently observed in the methods described in the art. In addition, the provision of a compound having a plurality of catalytically active sites, or precursors thereof, which belong to the same molecular entity contributes in reaching high catalyst loadings onto the surface of the solid material, unlike the methods described in the art. This is thanks to the fact that, in the active compound provided in the solution of step (a), the catalytically active sites are close to each other. This spatial proximity of active sites is further translated onto the surface of the electrode once the compound is anchored on said surface. In addition, the provision of a ligand interacting with the surface of the solid material through non-covalent

interactions in such a manner that substantially all the active sites in the catalytically active materials are not facing the surface of the solid material is advantageous as it warrants that all the catalytically active metal atoms in the catalytically active material are accessible to the substrates of the reaction and are not buried within the supramolecular assembly consisting of the solid material and the catalytically active compound. This results in a more efficient catalyst system presenting a higher density of active sites if compared with the methods reported in the art for the anchoring of molecular catalytically active complexes.

Thus, in a first aspect, the invention relates to a method as defined in claim 1.

In a second aspect, the invention relates to certain catalytically active compounds as defined in claim 12. These compounds are particularly useful for the method of the first aspect of the invention, as they provide a suitable configuration to accommodate different types of metals and for interacting with the surface of a solid material through non-covalent interactions in the manner defined above. In particular, when the catalytically active compound comprises ruthenium coordination complexes, such compound is particularly useful for the preparation of a water oxidation electrode with improved efficiency, as described herein.

In a third aspect, the invention relates to a composition as defined in claim 13. Such compositions are obtainable according to the method defined in the first aspect of the invention. These compositions are useful as catalysts, since the activity of the non-supported catalyst is typically preserved or enhanced upon anchoring onto the surface. Such compositions may also be formulated as inks to further facilitate the deposition of said material on a support.

In a fourth aspect, the invention relates to an electrode comprising a composition comprising an electrocatalytically active material that is deposited on an electrode support.

The fifth aspect of the invention relates to a device, such as fuel cell or an electrolyser, comprising the electrode of the fourth aspect of the invention and as defined in claim 15.

In a sixth aspect, the invention relates to a process for water oxidation as defined in claim 16. The process of the sixth aspect of the invention can advantageously be carried out in a broad range of pH and allows reaching high levels of oxygen production, even at neutral pH.

## BRIEF DESCRIPTION OF THE DRAWINGS

Fig. 1 represents the method of anchoring the compounds comprising a plurality of moieties of formula -($L_1$-$ML_2$)- onto carbon nanotubes according to one embodiment of the invention.

Fig. 2 represents microscopy images (STM) of compound (Ia1-15) deposited on a highly ordered pyrolytic graphite electrode surface.

Fig. 3 represents the Surface Raman Spectroscopy spectra of the following materials: (a) CNT@GC, (b) (Ia1-15), (c) (Ia1-15)@CNT@GC, (d) (Ia1-15·$H_2O$)@CNT@GC and (e) (Ia1-15·$H_2O$)@CNT@GC after controlled potential electrolysis (E = 1.86 V in a 1 M phbf (pH 7) solution for 6 h).

Fig. 4 represents the cyclic voltammetry curve obtained for (Ia1-15·$H_2O$)@CNT@GC in 1.0 M phosphate buffer (pH 7) at scan rate of 100 mV/s as described in Example 3.

Fig. 5 represents the cyclic voltammetry curves obtained for (I'a1-3)@CNT@GC before (plain line) and after (dashed line) a controlled potential electrolysis as described in Example 3.

Fig. 6 represents the cyclic voltammetry curve obtained for (Ia2-10·$(H_2O)_2$)@CNT@GC in 1.0 M phosphate buffer (pH 7) at scan rate of 100 mV/s as described in Example 3.

Fig. 7 represents the cyclic voltammetry curves obtained for (Ia1-5)@CNT@GC before (plain line) and after (dashed line) a controlled potential electrolysis as described in Example 3.

Fig. 8 represents the evolution of photocurrent density vs. time of a PV-EC experiment under 0.35 sun illumination and at pH 7 as described in Example 4.

FIG. 9 and 10 respectively represent oxygen and hydrogen evolution during irradiation of PV with 0.36 sun and water electrolysis carried out at pH 7. The dashed lines indicate the gas generated calculated from the charge passed through the circuit, while the solid lines represent the measured gas using Clark probes.

## DETAILED DESCRIPTION OF THE INVENTION

All terms as used herein in this application, unless otherwise stated, shall be understood in their ordinary meaning as known in the art. Other more specific definitions for certain terms as used in the present application are as set forth below and are intended to apply uniformly throughout the specification and claims unless an otherwise expressly set out definition provides a broader definition.

For the purposes of the invention, any ranges given include both the lower and the upper end-points of the range. Ranges given, such as temperatures, times, molar ratio and the like, should be considered approximate (i.e. with

a 5% margin of variation around indicated point), unless specifically stated.

In the context of the invention, the term "catalytically active material" refers to a material suitable for promoting chemical reactions taking place at one or more active sites of the material. When the catalytically active material is also an electrocatalytically active material, said active sites are in contact with or comprised within an electrode and promote a chemical transformation involving the transfer of electrons between the electrode and the active sites.

In the context of the invention, the term "electrode" refers to an element comprising a support suitable for an electrode comprising an electron conductive section, said support being used to close an electrical circuit through a medium, such as a solid or an ionic solution, separating two electrodes. An electrode suitable for electrocatalysis is an electrode further comprising an electrocatalytically active material that is used as a catalyst in an electrochemical reaction, such as reduction or oxidation reactions.

In the context of the invention, the term "coordination complex" consists of a central metal atom or ion, which is usually a transition metal atom or ion and is called the coordination centre, and a surrounding array of bound molecules or ions, that are in turn known as ligands or complexing agents. Ligands are typically coordinated to the coordination center through lone pairs of heteroatoms or anionic groups comprised in the molecular formula of the ligand. Where a ligand is bound to the coordination center through the lone pairs of two different heteroatoms or anionic groups comprised in the molecular formula of the ligand, said ligand is said to be bidentate. Where a ligand is bound to the coordination center through the lone pairs of three different heteroatoms or anionic groups comprised in the molecular formula of the ligand, said ligand is said to be tridentate. Where a ligand is bound to the coordination center through the lone pairs of four different heteroatoms or anionic groups comprised in the molecular formula of the ligand, said ligand is said to be tetradentate. Similarly, where a ligand is bound to the coordination center through the lone pairs of five different heteroatoms or anionic groups comprised in the molecular formula of the ligand, said ligand is said to be pentadentate.

In the context of the invention, the term "non-covalent interactions" refers to interactions between two molecular entities that does not involve the formation of a covalent bond or a coordination bond but rather involves electromagnetic or electrostatic interaction between said molecular entities. The chemical energy released in the formation of non-covalent interactions is typically on the order of 1-5 kcal/mol. Non-covalent interactions, as known in the art, include, among others, electrostatic interactions (ionic interactions, hydrogen bonding, halogen bonding), $\pi$-effects (such as $\pi$ - $\pi$ interactions, C-H- $\pi$ interactions, ion- $\pi$ interactions, polar- $\pi$ interactions), van der Waals forces (dipole-dipole interactions), and hydrophobic effects.

In the context of the invention, the term "supramolecular assembly" refers to a system comprising at least two molecular entities wherein each molecular entity interacts with at least one molecular entity through non-covalent interactions as defined above.

In the context of the invention, the term "oligomer" refers to a molecule comprising a plurality of identical repeating units.

In the context of the invention, the term "macrocycle" refers to a cyclic macromolecular entity which comprises at least 10 atoms or members of the cycle.

In the context of the invention, the term "aromatic ring system" refers to a planar ring system having a number of delocalized electrons to 4n+2, wherein n is an integer. Known simple aromatic ring systems includes, benzene, pyridine, pyrrole, imidazole, oxazole, thiazole, thioxazole, furan, and thiofuran.

In the context of the invention, the term "unsaturated ring" refers to a cyclic non-aromatic ring comprising at least two members connected with a double bond. Similarly, the term "saturated ring" refers to a cyclic non-aromatic ring wherein all the members of the ring are connected with single bonds.

According to the present invention, a ring system formed by "interconnected" rings means that the ring system is formed by at least two rings and said rings are bound via a bond from the atom of one ring to the atom of the other ring.

According to the present invention, a ring system formed by "bridged" rings means that the ring system is formed by at least two rings wherein two rings share at least two non-adjacent members.

According to the present invention, a ring system formed by "fused" rings means that the ring system is formed by at least two rings wherein two rings share two adjacent members.

In the context of the present invention, the term "alkyl" and its plural refer to a saturated linear or branched hydrocarbon group having the number of carbon atoms indicated in the description or in the claims. Examples of alkyl groups include, but are not limited to: methyl, ethyl, propyl, iso-propyl, butyl, iso-butyl, tert-butyl, pentyl, and hexyl.

In the context of the present invention, the term "alkenyl" and its plural refer to a saturated linear or branched hydrocarbon group having the number of carbon atoms indicated in the description or in the claims and further comprising at least one carbon-carbon double bond.

In the context of the present invention, the term "haloalkyl" and its plural refer to a saturated linear or branched hydrocarbon group having the number of carbon atoms indicated in the description or in the claims and wherein one or more of the hydrogen atoms is replaced by a halogen.

In the context of the present invention, the term "alkyloxy" and its plural refer to a saturated linear or branched hydrocarbon group having the number of carbon atoms indicated in the description or in the claims which is attached to

the remainder of the formula through an ether group (-O-).

The term "oxoanion" refers to a substituting group comprising a negatively charged oxygen anion. Oxoanions known in the art comprise carboxylate, sulfonate, phosphate.

The term "carbonaceous material" refers to a solid material composed essentially of carbon. Carbonaceous materials known in the art include, among others, graphite, carbon black, carbon felt, carbon paper, carbon nanotubes, graphene, reduced graphene oxide eventually doped with other atoms.

The term "conductive metal oxides" refer to metal oxide materials suitable for conducting electrons. Examples known in the art include, among others, indium tin oxide, fluorine-doped tin oxide and aluminium-doped zinc oxide.

The term "fuel cell" is known in the art and refers to an electrochemical device able to convert chemical energy into electrical energy. For instance, a fuel cell may use a reductant (hydrogen, gas) and an oxidant (oxygen, gas) to produce electricity and/or heat together with the reaction by-products. For instance, in a fuel cell that uses hydrogen and oxygen in the gas phase, a molecule of hydrogen is converted at one electrode in two protons and two electrons, while a molecule of oxygen reacts with the protons and electrons produced at the other electrode to produce water.

The term "electrolyser" is known in the art and refers to an electrochemical device able to convert electrical energy into chemical energy. A water electrolyser typically splits water into oxygen and hydrogen. Different types of electrolysers are known in the art, including, for instance, alkaline electrolysers, proton exchange membrane electrolysers (PEM), alkaline exchange membrane electrolysers (AEM).

The terms "water oxidation" and "oxygen evolution reaction" (OER) may be used interchangeably. Both terms refer to the electrochemical conversion of a water molecule into half a molecule of oxygen, two protons and two electrons. Such reaction usually takes place at the anode in a water electrolyser.

All the potential values described herein are converted to Reversible Hydrogen Electrode (RHE) by using the formula: $E$(RHE)= $E$ + 0.059pH + $E°(Hg/Hg_2SO_4)$. Where, $E$ is the working potential and $E°(Hg/Hg_2SO_4)$ = 0.65 V at 25 ºC.

According to the first aspect of the invention, the invention relates to a method for preparing a solid-supported catalyst comprising the steps of:

(a) providing a solution comprising a catalytically active compound or a precursor thereof which comprises in its molecular formula a plurality of moieties comprising the active sites of the catalytically active compound and of formula $-(L_1-ML_2)-$ wherein M is a transition metal that is catalytically active; $L_1$ is a bidentate or tridentate ligand attached to M through an atom selected from the group consisting of O, N and S; and $L_2$ is a tridentate, tetradentate or pentadentate ligand attached to M through heteroatoms selected from O, N, P and S;

(b) providing a mixture or a support, said mixture or support comprising a solid material suitable for interacting through non-covalent interactions with the ligands $L_2$ in the catalytically active material of step (a);

(c) adding the solution of step (a) to the mixture of step (b) to produce a mixture, or depositing the solution of step (a) to the support of step (b) to produce a composition, thereby resulting in the catalytically active material, or the precursor thereof, being anchored on the surface of the solid material;

whereby at least a portion of the ligand $L_2$ is arranged for interacting with the surface of the solid material of step (b) through non-covalent interactions in such a way that substantially all the active sites in the metal coordination complexes interacting with the surface are not facing the surface of the solid material.

In contrast with the methods described in the art as described above, the method of the invention allows preparing a catalytically active solid catalyst presenting an improved loading of the catalyst and an improved stability because the active sites of the catalyst are close to each other in the solid material and because the interaction between the solid support and the catalytically active material is strong enough to prevent leaching of the catalytically active sites from the surface.

While the method of the invention may be reduced to practice through the provision in step (a) of a solution of any type of catalytically active compound or precursor thereof as defined above, the catalytically active compound or precursor thereof is preferably one which is an electrocatalytically active compound or a precursor thereof which comprises in its molecular formula a plurality of moieties comprising the active sites of the electrocatalytically active compound and of formula $-(L_1-ML_2)-$ wherein M is a transition metal that is electrocatalytically active in one of its oxidized forms; $L_1$ is a bidentate or tridentate ligand attached to M through an atom selected from the group consisting of O, N and S; and $L_2$ is a tridentate, tetradentate or pentadentate ligand attached to M through heteroatoms selected from O, N and S; and the solid material of step (b) is an electron conductive material. Transition metals that are electrocatalytically active in one of their oxidized forms are known in the art and include, for instance, ruthenium optionally bonded to an oxo ligand (O), an hydroxo ligand (OH) or an aqua ligand ($H_2O$), iridium, cobalt, aluminium, molybdenum, vanadium, manganese and iron. M may thus be selected from the group consisting of ruthenium optionally bonded to an oxo ligand (O), an hydroxo ligand (OH) or an aqua ligand ($H_2O$), iridium, cobalt, aluminium, molybdenum, vanadium, manganese and iron.

In other preferred embodiments, optionally in combination with one or more of the preferred embodiments

described above, the catalytically active compound, or the precursor thereof, of step (a) of the method of the first aspect of the invention is one wherein each moiety of formula -($L_1$-$ML_2$)- is directly connected to a moiety of formula - ($L_1$-$ML_2$)- through the coordination of $L_1$ to M and/or is connected to a moiety of formula - ($L_1$-$ML_2$)- through a bridging coordination complex of a transition metal M' with a ligand that is coordinated to the moieties of formula -($L_1$-$ML_2$)- through heteroatoms comprised in the ligand $L_1$. When a moiety of formula -($L_1$-$ML_2$)- is connected to a moiety of formula -($L_1$-$ML_2$)- via a coordination complex of a transition metal M' as defined above, the catalytically active compound or the precursor thereof preferably forms a macrocyclic metallacage and said coordination complex of transition metal M' is more preferably one wherein M' is a transition metal selected from the group consisting of Pd, Pt, Zn, Ni, Fe an Cu coordinated to a bidentate or tridentate ligand through N or P atoms. It is even more preferred that M' is selected from the group consisting of Pd, Pt and Zn coordinated to a N, N bidentate ligand or a P, P bidentate ligand. Suitable N, N bidentate ligand or P, P bidentate ligands for coordinating to M' and for the formation of metallacages are known in the art and include, among others, 1,2-diaminoethane, 3,3'-bipyridine, 2,2'-bipyridine and (diphenylphosphine)($C_2$-$C_4$)alkyl.

In other more preferred embodiments, optionally in combination with one or more of the preferred embodiments described above, the catalytically active compound, or the precursor thereof, of step (a) of the method of the first aspect of the invention is one wherein each moiety of formula -($L_1$-$ML_2$)- is directly connected to a moiety of formula -($L_1$-$ML_2$)-through the coordination of $L_1$ to M.

In other more preferred embodiments, optionally in combination with one or more of the preferred embodiments described above, the catalytically active compound, or the precursor thereof, of step (a) of the method of the first aspect of the invention is one that is an oligomer of formula (I)

$$L_1\text{-}ML_2\text{-}(L_1\text{-}ML_2)_n\text{-}L_1 \qquad (I)$$

or a macrocycle of formula (I')

$$*\text{-}(L_1\text{-}ML_2)_{n'}\text{-}* \qquad (I')$$

wherein:

in the compound of formula (I) n is an integer of from 1 to 50;

in the compound of formula (I') n' is an integer of from 2 to 10 and the bonds represented with asterisks * represent a bond connecting the left end of the formula (I') with the right end of the formula (I').

In other more preferred embodiments, optionally in combination with one or more of the preferred embodiments described above, the catalytically active compound, or the precursor thereof, of step (a) of the method of the first aspect of the invention is one wherein, in each moiety of formula -($L_1$-$ML_2$)-, M is a cationic metal selected from the group consisting of ruthenium optionally bonded to an oxo ligand (O), an hydroxo ligand (OH) or an aqua ligand ($H_2O$), iridium, iron, cobalt, copper, zinc, nickel, aluminium, molybdenum, rhodium, manganese, vanadium and chromium; preferably, M is a cationic metal selected from the group consisting of ruthenium optionally bonded to an oxo ligand (O), an hydroxo ligand (OH) or an aqua ligand ($H_2O$), iron, cobalt, copper, zinc, nickel, aluminium, molybdenum, manganese, vanadium and chromium. Alternatively, M may be a lanthanide cation.

In other more preferred embodiments, optionally in combination with one or more of the preferred embodiments described above, the catalytically active compound, or the precursor thereof, of step (a) of the method of the first aspect of the invention is one wherein, in each moiety of formula -($L_1$-$ML_2$)-, M is ruthenium optionally bonded to an oxo ligand (O), an hydroxo ligand (OH) or an aqua ligand ($H_2O$).

In other more preferred embodiments, optionally in combination with one or more of the preferred embodiments described above, the catalytically active compound, or the precursor thereof, of step (a) of the method of the first aspect of the invention is one wherein, in each moiety of formula -($L_1$-$ML_2$)-, $L_1$ is a bidentate ligand suitable for bonding via dative bonding to two different atoms of M through two heteroatoms independently selected from the group consisting of O, N and S and consisting of a system of one to five saturated, unsaturated or aromatic rings, said rings being interconnected, bridged or fused, comprising from 5 to 6 members selected from the group consisting of C, CH, CH2, N, NH, O and S; provided that at least two of the members are selected from N, NH, O and S, the members being optionally substituted at any available position with a radical selected from the group consisting of halo, ($C_1$-$C_6$)alkyl, ($C_1$-$C_6$)haloalkyl, ($C_1$-$C_6$)alkyloxy, cyano and nitro; and wherein, when the ring system comprises two interconnected rings, said interconnection further optionally takes place through a moiety selected from the group consisting of ($C_1$-$C_6$)alkyl, ($C_2$-$C_6$)alkenyl, carbonyloxy (-COO-), carbonylamino (-CONH-), sulfonylamido (-$SO_2$NH-) and a moiety of formula (A)

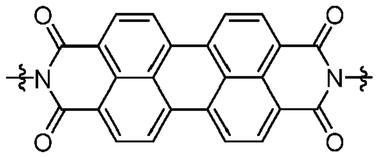

(A)

In other more preferred embodiments, optionally in combination with one or more of the preferred embodiments described above, the catalytically active compound, or the precursor thereof, of step (a) of the method of the first aspect of the invention is one wherein, in each moiety of formula -($L_1$-$ML_2$)-, $L_1$ is a bidentate ligand suitable for bonding via dative bonding to two different atoms of M through two N atoms and consisting of a system of one to four saturated, unsaturated or aromatic rings, said rings being interconnected, comprising from 5 to 6 members selected from the group consisting of C, CH, $CH_2$, N, and NH; provided that at least two of the members are selected from N, and NH, the members being optionally substituted at any available position with a radical selected from the group consisting of halo, ($C_1$-$C_6$)alkyl, ($C_1$-$C_6$)haloalkyl, ($C_1$-$C_6$)alkyloxy, cyano and nitro; and wherein, when the ring system comprises at least two interconnected rings, said interconnection further optionally takes place through a moiety selected from the group consisting of ($C_1$-$C_6$)alkyl, ($C_2$-$C_6$)alkenyl, carbonyloxy (-COO-), carbonylamino (-CONH-), sulfonylamido (-$SO_2$NH-), phenyl, biphenyl and a moiety of formula (A) as defined above.

In other more preferred embodiments, optionally in combination with one or more of the preferred embodiments described above, the catalytically active compound, or the precursor thereof, of step (a) of the method of the first aspect of the invention is one wherein, in each moiety of formula -($L_1$-$ML_2$)-, $L_1$ is a bidentate ligand suitable for bonding via dative bonding to two different atoms of M through two N atoms and consisting of a system of one to four saturated, unsaturated or aromatic rings, said rings being interconnected, comprising from 5 to 6 members selected from the group consisting of C, CH, $CH_2$, N, and NH; provided that at least two of the members are selected from N and NH; and wherein, when the ring system comprises at least two interconnected rings, said interconnection further optionally takes place through a moiety selected from the group consisting of ($C_1$-$C_6$)alkyl, phenyl, biphenyl and a moiety of formula (A) as defined above.

In other more preferred embodiments, optionally in combination with one or more of the preferred embodiments described above, the catalytically active compound, or the precursor thereof, of step (a) of the method of the first aspect of the invention is one wherein, in each moiety of formula -($L_1$-$ML_2$)-, $L_1$ is selected from the group consisting of triethylenediamine, tri(pyridin-4-yl)methane, 1,3,5-tri(pyridin-4-yl)benzene, 1,3,5-tri(4-(pyridin-4-yl)phen-1-yl)benzene, 2,4,6-tri(pyridine-4-yl)-1,3,5-triazine, pyrazine and bipyridine wherein the pyridine rings are optionally interconnected through a moiety selected from the group consisting of ($C_1$-$C_6$)alkyl, phenyl, biphenyl and a moiety of formula (A) as defined above.

In other more preferred embodiments, optionally in combination with one or more of the preferred embodiments described above, the catalytically active compound, or the precursor thereof, of step (a) of the method of the first aspect of the invention is one wherein, in each moiety of formula -($L_1$-$ML_2$)-, $L_1$ is 4,4'-bipyridine or 1,4-di(pyridin-3-yl)benzene.

In other more preferred embodiments, optionally in combination with one or more of the preferred embodiments described above, the catalytically active compound, or the precursor thereof, of step (a) of the method of the first aspect of the invention is one wherein, in each moiety of formula -($L_1$-$ML_2$)-, $L_2$ is a tridentate, tetradentate or pentadentate ligand attached to M through heteroatoms selected from O, N, P and S such that the coordination complex of formula $ML_2$ has a planar geometry. The complex of formula ML2 is said to have a planar geometry when the atom M and the heteroatoms of $L_2$ to which M is attached belong to the same plane.

In other more preferred embodiments, optionally in combination with one or more of the preferred embodiments described above, the catalytically active compound, or the precursor thereof, of step (a) of the method of the first aspect of the invention is one wherein, in each moiety of formula -($L_1$-$ML_2$)-, $L_2$ is arranged to interact with the surface of the solid material as described above through non-covalent interactions selected from the group consisting of $\pi$-$\pi$ stacking, C-H-$\pi$ interactions, metal-anion interactions, anion-$\pi$ interaction and cation-$\pi$ interactions.

When $L_2$ is arranged to interact with the surface of the solid material as described above through $\pi$-$\pi$ stacking interactions, $L_2$ may be functionalized at one or more available positions with an aromatic ring system consisting of one to six aromatic rings, such as pyrene, that is optionally connected to the remainder part of $L_2$ via a ($C_1$-$C_{12}$)alkyl radical. When $L_2$ is arranged to interact with the surface of the solid material as described above through C-H-$\pi$ stacking interactions, $L_2$ comprises at least one optionally substituted aromatic ring that is not functionalized at two or more adjacent positions of the aromatic ring. When $L_2$ is arranged to interact with the surface of the solid material as described above through metal-anion or anion-$\pi$ interactions, $L_2$ may be functionalized at one or more available positions with a group selected from carboxylate, sulfonate, hydroxamate, silatrane and phosphate. Such groups have been described in Chem. Soc. Rev., 2017, 46, 6099-6110, Figure 2, incorporated herein by reference. When $L_2$ is arranged to interact with the surface of the solid material as described above through cation-$\pi$ interactions, $L_2$ may be functionalized at one or more available

positions with an ammonium group or a quaternary ammonium group. Such functionalization is at such an available position in the ligand $L_2$ that the bond (i) between the atom of $L_2$ bearing the functional group suitable for engaging in a non-covalent interaction with said functional group and the bond (ii) between the metal and the substrate in the catalytically active site form an angle comprised of between 90º to 270º, preferably when the non-covalent interaction is C-H-$\pi$ interactions, metal-anion interactions, anion-$\pi$ interaction or cation-$\pi$ interactions. More preferably, such angle is between 120º and 240º; even more preferably, it is of about 180º. This warrants that substantially all the active sites in the metal coordination complexes interacting with the surface are not facing the surface of the solid material. When $L_2$ comprises an heteroaromatic ring coordinated to M through a heteroatom that is also functionalized with a functional group suitable for engaging in a non-covalent interaction, such as N, said functional group suitable is preferably at a position that is not adjacent to said heteroatom in said heteroaromatic ring of $L_2$; preferably, it is at an opposite position in the heteroaromatic ring.

In other more preferred embodiments, optionally in combination with one or more of the preferred embodiments described above, the catalytically active compound, or the precursor thereof, of step (a) of the method of the first aspect of the invention is one wherein, in each moiety of formula -($L_1$-$ML_2$)-, $L_2$ is arranged to interact with the surface of the solid material as described above through C-H-$\pi$ interactions, and wherein $L_2$ comprises at least one optionally substituted aromatic ring that is not functionalized at two or more adjacent positions of the aromatic ring.

In other more preferred embodiments, optionally in combination with one or more of the preferred embodiments described above, the catalytically active compound, or the precursor thereof, of step (a) of the method of the first aspect of the invention is one wherein, in each moiety of formula -($L_1$-$ML_2$)-, $L_2$ is arranged to interact with the surface of the solid material, preferably through C-H-$\pi$ interactions, such that the free energy of the interaction between the electrocatalytically active material or compound, or the precursor thereof, and the surface of the solid material is at least 30 kcal/mol.

In other more preferred embodiments, optionally in combination with one or more of the preferred embodiments described above, the catalytically active compound, or the precursor thereof, of step (a) of the method of the first aspect of the invention is one wherein, in each moiety of formula -($L_1$-$ML_2$)-, $L_2$ is a tridentate, tetradentate or pentadentate ligand attached to M through heteroatoms selected from O and N.

In other more preferred embodiments, optionally in combination with one or more of the preferred embodiments described above, the catalytically active compound, or the precursor thereof, of step (a) of the method of the first aspect of the invention is one wherein, in each moiety of formula -($L_1$-$ML_2$)-, $L_2$ is a tridentate, tetradentate or pentadentate ligand attached to M through heteroatoms selected from O and N, and of formula (II')

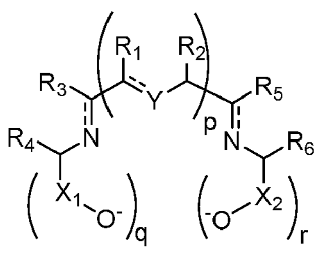

(II')

wherein Y is CH or N,
each of p, q and r is independently 0 or 1;
each dashed bond represents a single or a double bond;
$X_1$ and $X_2$ are independently selected from the group consisting of carbonyl, sulfonyl and phosphoryl; and wherein each one of the pairs $R_1$ and $R_2$, $R_3$ and $R_4$, $R_5$ and $R_6$, together with the atoms to which they are attached, independently form a ring system consisting of from one to two aromatic rings of 5 to 6 members selected from the group consisting of C, CH, N and O, said ring system being optionally substituted at any available position with a radical selected from the group consisting of halo, ($C_1$-$C_6$)alkyl, ($C_1$-$C_6$)haloalkyl, ($C_1$-$C_6$)alkyloxy, cyano and nitro, provided that: when $L_2$ interacts with the solid surface through C-H-$\pi$ interactions; at least two adjacent available positions in at least one of said ring systems is not substituted;
or, alternatively, when $L_2$ interacts with the solid surface through $\pi$-$\pi$ interactions; at least one of the ring systems formed by the pairs of $R_1$ and $R_2$, $R_3$ and $R_4$, $R_5$ and $R_6$, is further substituted at one or more available positions with an aromatic ring system consisting of one to six aromatic rings, such as pyrene, that is optionally connected to the remainder part of $L_2$ via a ($C_1$-$C_{12}$alkyl radical;
or, alternatively, when $L_2$ interacts with the solid surface through anion-$\pi$ or metal anions interactions; at least one

of the ring systems formed by the pairs of $R_1$ and $R_2$, $R_3$ and $R_4$, $R_5$ and $R_6$, is further substituted at one or more available positions with a group selected from carboxylate, sulfonate, hydroxamate, silatrane and phosphate; or, alternatively, when $L_2$ interacts with the solid surface through cation-π interactions; at least one of the ring systems formed by the pairs of $R_1$ and $R_2$, $R_3$ and $R_4$, $R_5$ and $R_6$, is further substituted at one or more available positions with an ammonium group. Such an arrangement of the compound of formula (II') allows the interaction of $L_2$ with the surface of the solid material in such a way that substantially all the active sites in the metal coordination complexes interacting with the surface are not facing the surface of the solid material.

In other more preferred embodiments, optionally in combination with one or more of the preferred embodiments described above, the catalytically active compound, or the precursor thereof, of step (a) of the method of the first aspect of the invention is one wherein, in each moiety of formula $-(L_1-ML_2)-$, $L_2$ is a compound of formula (II') as defined above that interacts with the solid surface through C-H-π interactions. Such ligand $L_2$ of formula (II') is suitable for interacting with a solid surface through C-H-π interactions, as it is provided with two adjacent C-H bonds located on an aromatic ring.

In other more preferred embodiments, optionally in combination with one or more of the preferred embodiments described above, the catalytically active compound, or the precursor thereof, of step (a) of the method of the first aspect of the invention is one wherein, in each moiety of formula $-(L_1-ML_2)-$, $L_2$ is a compound of formula (II') as defined above wherein Y is N and at least one of q or r is 1 that preferably interacts with the solid surface through C-H-π interactions.

In other more preferred embodiments, optionally in combination with one or more of the preferred embodiments described above, the catalytically active compound, or the precursor thereof, of step (a) of the method of the first aspect of the invention is one wherein, in each moiety of formula $-(L_1-ML_2)-$, $L_2$ is a compound of formula (II)

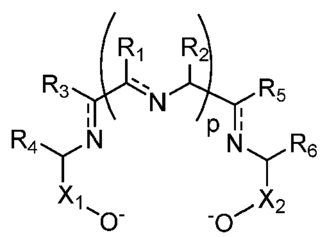

(II)

wherein p is 0 or 1;
each dashed bond represents a single or a double bond and wherein each one of the pairs $R_1$ and $R_2$, $R_3$ and $R_4$, $R_5$ and $R_6$, together with the atoms to which they are attached, independently form a ring system selected from the group consisting of pyrrole, pyridine, oxazole, thioxazole, indole and isoquinoline, said ring system being optionally substituted at any available position with a radical selected from the group consisting of halo, $(C_1-C_6)$alkyl, $(C_1-C_6)$haloalkyl, $(C_1-C_6)$alkyloxy, cyano and nitro, provided that at least two adjacent available positions in at least two of said ring systems is not substituted;
$X_1$ and $X_2$ are independently selected from the group consisting of carbonyl, sulfonyl and phosphoryl. Such ligand $L_2$ of formula (II) is suitable for interacting with a solid surface through C-H-π interactions, as it is provided with two adjacent C-H bonds located on two aromatic rings.

In other more preferred embodiments, optionally in combination with one or more of the preferred embodiments described above, the catalytically active compound, or the precursor thereof, of step (a) of the method of the first aspect of the invention is one wherein, in each moiety of formula $-(L_1-ML_2)-$, $L_2$ is a compound of formula (II) as defined above wherein $X_1$ and $X_2$ are each a carbonyl group.

In other more preferred embodiments, optionally in combination with one or more of the preferred embodiments described above, the catalytically active compound, or the precursor thereof, of step (a) of the method of the first aspect of the invention is one wherein, in each moiety of formula $-(L_1-ML_2)-$, $L_2$ is a compound of formula (II) as defined above wherein each one of the pairs $R_1$ and $R_2$, $R_3$ and $R_4$, $R_5$ and $R_6$, together with the atoms to which they are attached, independently form a pyridine ring system.

In other more preferred embodiments, optionally in combination with one or more of the preferred embodiments described above, the catalytically active compound, or the precursor thereof, of step (a) of the method of the first aspect of the invention is one wherein, in each moiety of formula $-(L_1-ML_2)-$, $L_2$ is selected from (tda) and (bda)

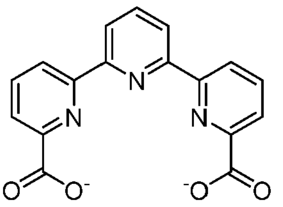 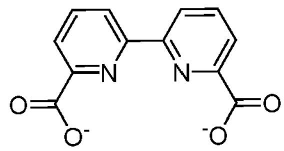

(tda) (bda)

In other more preferred embodiments, optionally in combination with one or more of the preferred embodiments described above, the catalytically active compound, or the precursor thereof, of step (a) of the method of the first aspect of the invention is one wherein, in each moiety of formula $-(L_1-ML_2)-$, M and $L_2$ are each as defined in any of the embodiments defined above. In other more preferred embodiments, optionally in combination with one or more of the preferred embodiments described above, the catalytically active compound, or the precursor thereof, of step (a) of the method of the first aspect of the invention is one wherein, in each moiety of formula $-(L_1-ML_2)-$, $L_1$ and $L_2$ are each as defined in any of the embodiments defined above. In other more preferred embodiments, optionally in combination with one or more of the preferred embodiments described above, the catalytically active compound, or the precursor thereof, of step (a) of the method of the first aspect of the invention is one wherein, in each moiety of formula - $(L_1-ML_2)-$, M and $L_1$ are each as defined in any of the embodiments defined above. In other more preferred embodiments, optionally in combination with one or more of the preferred embodiments described above, the catalytically active compound, or the precursor thereof, of step (a) of the method of the first aspect of the invention is one wherein, in each moiety of formula $-(L_1-ML_2)-$, M, $L_1$ and $L_2$ are each as defined in any of the embodiments defined above.

Thus, in other more preferred embodiments, the catalytically active compound, or the precursor thereof, of step (a) of the method of the first aspect of the invention comprises in its molecular formula a plurality of moieties comprising the active sites of the catalytically active compound and of formula $-(L_1-ML_2)-$ wherein:

M is a cationic metal selected from the group consisting of ruthenium optionally bonded to an oxo ligand (O), an hydroxo ligand (OH) or an aqua ligand ($H_2O$), iridium, iron, cobalt, copper, zinc, nickel, aluminium, molybdenum, rhodium, manganese, vanadium and chromium;

$L_1$ is a bidentate ligand suitable for bonding via dative bonding to two different atoms of M through two heteroatoms independently selected from the group consisting of O, N and S and consisting of a system of one to five saturated, unsaturated or aromatic rings, said rings being interconnected, bridged or fused, comprising from 5 to 6 members selected from the group consisting of C, CH, CH2, N, NH, O and S; provided that at least two of the members are selected from N, NH, O and S, the members being optionally substituted at any available position with a radical selected from the group consisting of halo, $(C_1-C_6)$alkyl, $(C_1-C_6)$haloalkyl, $(C_1-C_6)$alkyloxy, cyano and nitro; and wherein, when the ring system comprises two interconnected rings, said interconnection further optionally takes place through a moiety selected from the group consisting of $(C_1-C_6)$alkyl, $(C_2-C_6)$alkenyl, carbonyloxy (-COO-), carbonylamino (-CONH-), sulfonylamido ($-SO_2NH-$), phenyl, biphenyl and a moiety of formula (A)

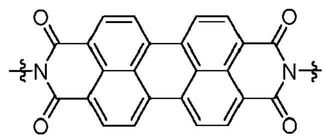

(A)

and $L_2$ is a tridentate, tetradentate or pentadentate ligand attached to M through heteroatoms selected from O and N, and of formula (II')

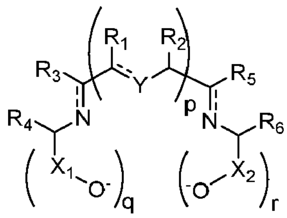

(II')

wherein Y is CH or N,
each of p, q and r is independently 0 or 1;
each dashed bond represents a single or a double bond;
$X_1$ and $X_2$ are independently selected from the group consisting of carbonyl, sulfonyl and phosphoryl; and wherein each one of the pairs $R_1$ and $R_2$, $R_3$ and $R_4$, $R_5$ and $R_6$, together with the atoms to which they are attached, independently form a ring system consisting of from one to two aromatic rings of 5 to 6 members selected from the group consisting of C, CH, N and O, said ring system being optionally substituted at any available position with a radical selected from the group consisting of halo, $(C_1$-$C_6)$alkyl, $(C_1$-$C_6)$haloalkyl, $(C_1$-$C_6)$alkyloxy, cyano and nitro, provided that: when $L_2$ interacts with the solid surface through C-H-$\pi$ interactions; at least two adjacent available positions in at least one of said ring systems is not substituted;
or, alternatively, when $L_2$ interacts with the solid surface through $\pi$-$\pi$ interactions; at least one of the ring systems formed by the pairs of $R_1$ and $R_2$, $R_3$ and $R_4$, $R_5$ and $R_6$, is further substituted at one or more available positions with an aromatic ring system consisting of one to six aromatic rings, such as pyrene, that is optionally connected to the remainder part of $L_2$ via a $(C_1$-$C_{12}$alkyl radical;
or, alternatively, when $L_2$ interacts with the solid surface through anion-$\pi$ or metal anions interactions; at least one of the ring systems formed by the pairs of $R_1$ and $R_2$, $R_3$ and $R_4$, $R_5$ and $R_6$, is further substituted at one or more available positions with an oxoanion group selected from carboxylate, sulfonate and phosphate;
or, alternatively, when $L_2$ interacts with the solid surface through cation-$\pi$ interactions; at least one of the ring systems formed by the pairs of $R_1$ and $R_2$, $R_3$ and $R_4$, $R_5$ and $R_6$, is further substituted at one or more available positions with an ammonium group.

In other more preferred embodiments, the catalytically active compound, or the precursor thereof, of step (a) of the method of the first aspect of the invention comprises in its molecular formula a plurality of moieties comprising the active sites of the catalytically active compound and of formula -$(L_1$-$ML_2)$- wherein:

M is a cationic metal selected from the group consisting of ruthenium optionally bonded to an oxo ligand (O), an hydroxo ligand (OH) or an aqua ligand ($H_2O$), iridium, iron, cobalt, copper, zinc, nickel, aluminium, molybdenum, rhodium, manganese, vanadium and chromium;
$L_1$ is a bidentate ligand suitable for bonding via dative bonding to two different atoms of M through two heteroatoms independently selected from the group consisting of O, N and S and consisting of a system of one to five saturated, unsaturated or aromatic rings, said rings being interconnected, bridged or fused, comprising from 5 to 6 members selected from the group consisting of C, CH, CH2, N, NH, O and S; provided that at least two of the members are selected from N, NH, O and S, the members being optionally substituted at any available position with a radical selected from the group consisting of halo, $(C_1$-$C_6)$alkyl, $(C_1$-$C_6)$haloalkyl, $(C_1$-$C_6)$alkyloxy, cyano and nitro; and wherein, when the ring system comprises two interconnected rings, said interconnection further optionally takes place through a moiety selected from the group consisting of $(C_1$-$C_6)$alkyl, $(C_2$-$C_6)$alkenyl, carbonyloxy (-COO-), carbonylamino (-CONH-), sulfonylamido (-$SO_2$NH-) and a moiety of formula (A)

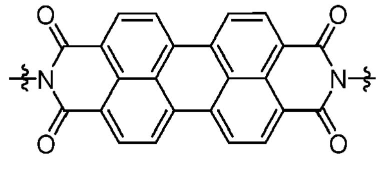

(A)

and

$L_2$ is a ligand of formula (II)

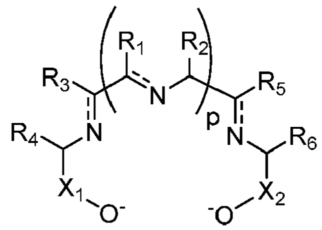

(II)

wherein p is 0 or 1;
each dashed bond represents a single or a double bond and wherein each one of the pairs $R_1$ and $R_2$, $R_3$ and $R_4$, $R_5$ and $R_6$, together with the atoms to which they are attached, independently form a ring system selected from the group consisting of pyrrole, pyridine, oxazole, thioxazole, indole and isoquinoline, said ring system being optionally substituted at any available position with a radical selected from the group consisting of halo, $(C_1-C_6)$alkyl, $(C_1-C_6)$haloalkyl, $(C_1-C_6)$alkyloxy, cyano and nitro, provided that at least two adjacent available positions in at least two of said ring systems is not substituted;
$X_1$ and $X_2$ are independently selected from the group consisting of carbonyl, sulfonyl and phosphoryl.

In other more preferred embodiments, the catalytically active compound, or the precursor thereof, of step (a) of the method of the first aspect of the invention comprises in its molecular formula a plurality of moieties comprising the active sites of the catalytically active compound and of formula $-(L_1-ML_2)-$ wherein:

M is ruthenium optionally bonded to an oxo ligand (O), an hydroxo ligand (OH) or an aqua ligand ($H_2O$);
$L_1$ is a bidentate ligand suitable for bonding via dative bonding to two different atoms of M through two N atoms and consisting of a system of one to four saturated, unsaturated or aromatic rings, said rings being interconnected, comprising from 5 to 6 members selected from the group consisting of C, CH, CH2, N, and NH; provided that at least two of the members are selected from N and NH; and wherein, when the ring system comprises at least two interconnected rings, said interconnection further optionally takes place through a moiety selected from the group consisting of $(C_1-C_6)$alkyl, phenyl, biphenyl and a moiety of formula (A) as defined above; and
$L_2$ is a ligand of formula (II)

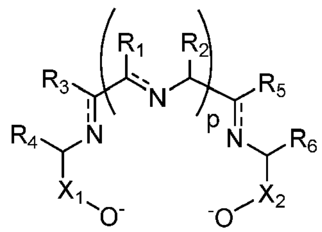

(II)

wherein p is 0 or 1;
each dashed bond represents a single or a double bond and wherein each one of the pairs $R_1$ and $R_2$, $R_3$ and $R_4$, $R_5$ and $R_6$, together with the atoms to which they are attached, independently form a pyridine ring system optionally substituted at any available position with a radical selected from the group consisting of halo, $(C_1-C_6)$alkyl, $(C_1-C_6)$haloalkyl, $(C_1-C_6)$alkyloxy, cyano and nitro, provided that at least two adjacent available positions in at least two of said ring systems is not substituted;
$X_1$ and $X_2$ are independently selected from the group consisting of carbonyl, sulfonyl and phosphoryl.

In other more preferred embodiments, the catalytically active compound, or the precursor thereof, of step (a) of the method of the first aspect of the invention comprises in its molecular formula a plurality of moieties comprising the active sites of the catalytically active compound and of formula $-(L_1-ML_2)-$ wherein:

M is ruthenium optionally bonded to an oxo ligand (O), an hydroxo ligand (OH) or an aqua ligand ($H_2O$);
$L_1$ is selected from the group consisting of triethylenediamine, tri(pyridin-4-yl)methane, 1,3,5-tri(pyridin-4-yl)benzene, 1,3,5-tri(4-(pyridin-4-yl)phen-1-yl)benzene, 2,4,6-tri(pyridine-4-yl)-1,3,5-triazine, pyrazine and bipyridine wherein the pyridine rings are optionally interconnected through a moiety selected from the group consisting of ($C_1$-$C_6$)alkyl, phenyl, biphenyl and a moiety of formula (A) as defined above; and
$L_2$ is a ligand of formula (II)

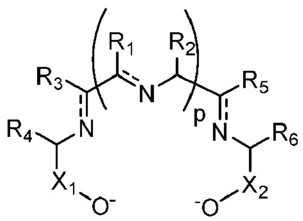

(II)

wherein p is 0 or 1;
each dashed bond represents a single or a double bond and wherein each one of the pairs $R_1$ and $R_2$, $R_3$ and $R_4$, $R_5$ and $R_6$, together with the atoms to which they are attached, independently form a pyridine ring system;
$X_1$ and $X_2$ are independently selected from the group consisting of carbonyl, sulfonyl and phosphoryl.

In other more preferred embodiments, the catalytically active compound, or the precursor thereof, of step (a) of the method of the first aspect of the invention comprises in its molecular formula a plurality of moieties comprising the active sites of the catalytically active compound and of formula -($L_1$-$ML_2$)- wherein:

M is ruthenium optionally bonded to an oxo ligand (O), an hydroxo ligand (OH) or an aqua ligand ($H_2O$);
$L_1$ is 4,4'-bipyridine or 1,4-di(pyridin-3-yl)benzene; and
$L_2$ is selected from (tda) and (bda)

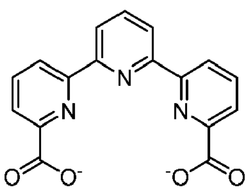

(tda)

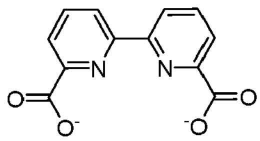

(bda)

In other more preferred embodiments, optionally in combination with one or more of the preferred embodiments described above, the catalytically active compound, or the precursor thereof, of step (a) of the method of the first aspect of the invention comprises at least 3 moieties of formula -($L_1$-$ML_2$)-; preferably, it comprises at least 4 moieties of formula -($L_1$-$ML_2$)-. This has the advantage of providing a strong interaction between ligand $L_2$ and the surface of the solid material.
In other more preferred embodiments, optionally in combination with one or more of the preferred embodiments described above, the catalytically active compound, or the precursor thereof, of step (a) of the method of the first aspect of the invention comprises from 3 to 50 moieties of formula -($L_1$-$ML_2$)- as defined above.
In other more preferred embodiments, optionally in combination with one or more of the preferred embodiments described above, the catalytically active compound, or the precursor thereof, of step (a) of the method of the first aspect of the invention comprises from 4 to 15 moieties of formula -($L_1$-$ML_2$)- as defined above.
In other more preferred embodiments, optionally in combination with one or more of the preferred embodiments described above, the catalytically active compound, or the precursor thereof, of step (a) of the method of the first aspect of the invention is one that is an oligomer of formula (I)

$$L_1\text{-}ML_2\text{-}(L_1\text{-}ML_2)_n\text{-}L_1 \qquad (I)$$

or a macrocycle of formula (I')

$$*-(L_1-ML_2)_{n'}-* \qquad (I')$$

wherein:

in the compound of formula (I) n is an integer of from 3 to 50;
in the compound of formula (I') n' is an integer of from 3 to 10 and the bonds represented with asterisks * represent a bond connecting the left end of the formula (I') with the right end of the formula (I'); and wherein each of $L_1$, M and $L_2$ are as defined in any of the embodiments above and below.

In other more preferred embodiments, optionally in combination with one or more of the preferred embodiments described above, the catalytically active compound, or the precursor thereof, of step (a) of the method of the first aspect of the invention is an oligomer of formula (Ia)

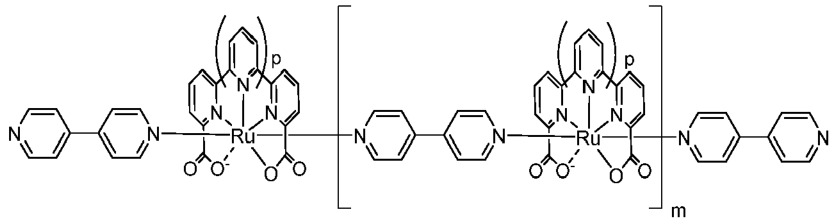

(Ia)

wherein m is from 1 to 14;
p is 0 or 1 such that the dashed bond represents a single bond when p is 0; and wherein each ruthenium atom is further optionally bonded to an oxo ligand (O), an hydroxo ligand (OH) or an aqua ligand ($H_2O$); or a macrocycle of formula (I'a)

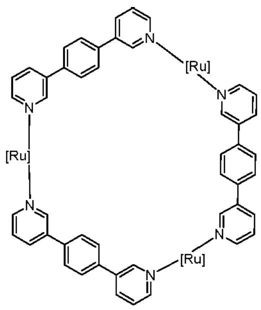

wherein each [Ru] represents a moiety of formula

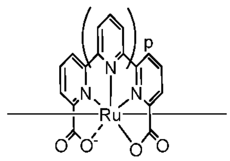

(I'a)

and wherein p is 0 or 1 such that the dashed bond represents a single bond when p is 0; and wherein each ruthenium atom is further optionally bonded to an oxo ligand (O), an hydroxo ligand (OH) or an aqua ligand ($H_2O$).

In other more preferred embodiments, optionally in combination with one or more of the preferred embodiments described above, the catalytically active compound, or the precursor thereof, of step (a) of the method of the first aspect of the invention is an oligomer of formula (Ia) as defined above wherein m is 1, 3, 4, 9 or 14; preferably wherein m is 3, 4, 9 or 14; or a macrocycle of formula (I'a) wherein p is 0. These compounds are particularly suitable for the preparation of an electrocatalytically active catalyst composition suitable for the oxidation of water in a broad range of pH and with high efficiency, as described below.

In other more preferred embodiments of the first aspect of the invention, optionally in combination with one or more of the preferred embodiments described above, the solution of step (a) is a solution of a polar protic solvent. Suitable polar protic solvents are known in the art and include alcohols and halogenated alcohols, optionally mixed with water. Preferably, the solution of step (a) is a solution of trifluoroethanol.

The method of the first aspect of the invention also comprises step (b) of providing a mixture or a support, said mixture or support comprising a solid material suitable for interacting through non-covalent interactions with the ligands $L_2$ in the catalytically active material of step (a). When $L_2$ is arranged for interacting with the surface of a solid material

as defined above through metal-anion interactions, said solid material is selected from the group consisting of metal(0), metal oxides, metal phosphides, metal sulphides and alloys. Such solid materials, when electron conductive, are suitable for receiving an electrocatalytically active compound as described above. When $L_2$ is arranged for interacting with the surface of a solid material as defined above through $\pi$-$\pi$ stacking, C-H-$\pi$ interactions, anion-$\pi$ interaction or cation-$\pi$ interactions, said solid material is selected from the group consisting of carbon nitride, covalent triazine frameworks and carbonaceous materials.

In other more preferred embodiments of the first aspect of the invention, optionally in combination with one or more of the preferred embodiments described above, the mixture or support of step (b) comprises a carbonaceous material. Preferably, the mixture or support of step (b) comprises a solid material selected from the group consisting of graphite, graphene, reduced graphene oxide and carbon nanotubes. More preferably, the mixture or support of step (b) comprises a solid material selected from the group consisting of graphite and carbon nanotubes. In certain embodiments, when said solid material is comprised in a support, said support may be a conductive solid material, such as metal oxides, for example, Indium tin oxide or Fluorine doped tin oxide, on the surface of which the solid material is deposited.

When step (b) consists in providing a mixture of a solid material as described above, the mixture of step (b) is preferably a mixture of a polar aprotic solvent. Polar aprotic solvents are known in the art and include, ethers, ethyl acetate, and acetone, among others. In more preferred embodiments, the solvent of the mixture of step (b) is tetrahydrofuran. It is further preferred that the mixture of step (b) is a suspension of carbon nanotubes in tetrahydrofuran. In other embodiments, the support of step (b) is Fluorine-doped Tin Oxide, on the surface of which carbon nanotubes are deposited.

Step (c) of the method of the first aspect of the invention, as described above, comprises adding the solution of step (a) to the mixture of step (b) to produce a mixture or depositing the solution of step (a) to the support of step (b) to produce a composition, thereby resulting in the catalytically active material, or the precursor thereof, being anchored on the surface of the solid material. The anchoring of the catalytically active compound, or the precursor thereof, is triggered by the non-covalent interactions between the ligand $L_2$ in the active compound and the surface of the solid material, as described above. Such anchoring may take place in solution or on the surface of the solid material. The weight ratio of the catalytically active compound, or the precursor thereof to the solid material in the respective solution of step (a) and mixture of step (b) is comprised from 1:5 to 1:20. The weight ratio of the catalytically active compound, or the precursor thereof in the respective solution of step (a) and mixture of step (b) is preferably of 1:10.

Alternatively, when the solution of step (a) is deposited on the support comprising a solid material as defined above, said deposition step may be carried out by drop-casting or inkjet printing. It is preferably carried out by drop-casting.

The method described above is particularly useful for the preparation of an electrode comprising an electrocatalytically active compound, or a precursor thereof, anchored on an electrode support. This is particularly the case when the catalytically active compound, or the precursor thereof, is a compound of formula (I) or (I') as defined above where M is a transition metal that is electrocatalytically active in one of its oxidized forms; and more particularly when the catalytically active compound, or the precursor thereof, is a compound of formula (Ia) or (I'a) as defined above.

Thus, in other preferred embodiments, optionally in combination with one or more of the preferred embodiments described above, the method of the first aspect of the invention allows preparing an electrocatalytically active electrode and further comprises the step (d) of depositing the mixture obtained in step (c) on a solid support suitable for an electrode. Supports suitable for electrodes are known in the art and include conductive metal oxides, such as ITO or FTO, metals, alloys and glassy carbon. It is further preferred that the support is conductive metal oxides or glassy carbon. Alternatively, the composition obtained in step (c) may also be useful as an electrode when it comprises an electrocatalytically active compound or a precursor thereof as defined above.

In more preferred embodiments, optionally in combination with one or more of the preferred embodiments described above, the method of the first aspect of the invention is one which satisfies at least one, preferably all, of the following conditions:

(i) step (a) is carried out in a polar protic solvent that is trifluoroethanol,
(ii) the catalytically active material, or the precursor thereof, of step (a) comprises in its molecular formula a plurality of moieties comprising the active sites of the catalytically active compound and of formula -($L_1$-$ML_2$)- wherein:

M is a cationic metal selected from the group consisting of ruthenium optionally bonded to an oxo ligand (O), an hydroxo ligand (OH) or an aqua ligand ($H_2O$), iridium, iron, cobalt, copper, zinc, nickel, aluminium, molybdenum, rhodium, manganese, vanadium and chromium;

$L_1$ is a bidentate ligand suitable for bonding via dative bonding to two different atoms of M through two heteroatoms independently selected from the group consisting of O, N and S and consisting of a system of one to five saturated, unsaturated or aromatic rings, said rings being interconnected, bridged or fused, comprising from 5 to 6 members selected from the group consisting of C, CH, CH2, N, NH, O and S; provided that at least two of the members are selected from N, NH, O and S, the members being optionally substituted at any available

position with a radical selected from the group consisting of halo, $(C_1-C_6)$alkyl, $(C_1-C_6)$haloalkyl, $(C_1-C_6)$alkyloxy, cyano and nitro; and wherein, when the ring system comprises two interconnected rings, said interconnection further optionally takes place through a moiety selected from the group consisting of $(C_1-C_6)$alkyl, $(C_2-C_6)$alkenyl, carbonyloxy (-COO-), carbonylamino (-CONH-), sulfonylamido ($-SO_2NH-$), phenyl, biphenyl and a moiety of formula (A)

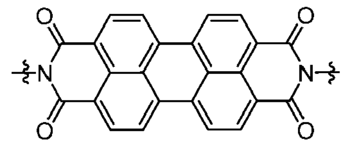

(A)

and

$L_2$ is a ligand of formula (II)

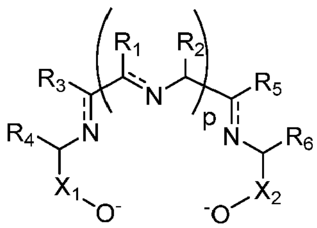

(II)

wherein p is 0 or 1;

each dashed bond represents a single or a double bond and wherein each one of the pairs $R_1$ and $R_2$, $R_3$ and $R_4$, $R_5$ and $R_6$, together with the atoms to which they are attached, independently form a ring system selected from the group consisting of pyrrole, pyridine, oxazole, thioxazole, indole and isoquinoline, said ring system being optionally substituted at any available position with a radical selected from the group consisting of halo, $(C_1-C_6)$alkyl, $(C_1-C_6)$haloalkyl, $(C_1-C_6)$alkyloxy, cyano and nitro, provided that at least two adjacent available positions in at least two of said ring systems is not substituted;

$X_1$ and $X_2$ are independently selected from the group consisting of carbonyl, sulfonyl and phosphoryl;

(iii) the mixture of step (b) comprises a solvent that is tetrahydrofuran,

(iv) the solid material of step (b) is graphite or carbon nanotubes.

In more preferred embodiments, optionally in combination with one or more of the preferred embodiments described above, the method of the first aspect of the invention is one which satisfies at least one, preferably all, of the following conditions:

(i) step (a) is carried out in a polar protic solvent that is trifluoroethanol,

(ii) the catalytically active material, or the precursor thereof, of step (a) comprises in its molecular formula a plurality of moieties comprising the active sites of the catalytically active compound and of formula $-(L_1-ML_2)-$ wherein:

M is ruthenium optionally bonded to an oxo ligand (O), an hydroxo ligand (OH) or an aqua ligand ($H_2O$);

$L_1$ is a bidentate ligand suitable for bonding via dative bonding to two different atoms of M through two N atoms and consisting of a system of one to four saturated, unsaturated or aromatic rings, said rings being interconnected, comprising from 5 to 6 members selected from the group consisting of C, CH, CH2, N, and NH; provided that at least two of the members are selected from N and NH; and wherein, when the ring system comprises at least two interconnected rings, said interconnection further optionally takes place through a moiety selected from the group consisting of $(C_1-C_6)$alkyl, phenyl, biphenyl and a moiety of formula (A) as defined above; and

$L_2$ is a ligand of formula (II)

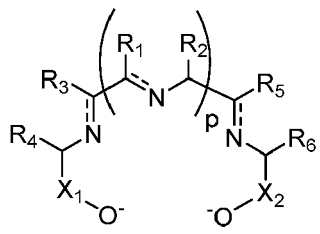

(II)

wherein p is 0 or 1;

each dashed bond represents a single or a double bond and wherein each one of the pairs $R_1$ and $R_2$, $R_3$ and $R_4$, $R_5$ and $R_6$, together with the atoms to which they are attached, independently form a pyridine ring system optionally substituted at any available position with a radical selected from the group consisting of halo, ($C_1$-$C_6$)alkyl, ($C_1$-$C_6$)haloalkyl, ($C_1$-$C_6$)alkyloxy, cyano and nitro, provided that at least two adjacent available positions in at least two of said ring systems is not substituted;

$X_1$ and $X_2$ are independently selected from the group consisting of carbonyl, sulfonyl and phosphoryl,

(iii) the mixture of step (b) comprises a solvent that is tetrahydrofuran,

(iv) the solid material of step (b) is graphite or carbon nanotubes.

In more preferred embodiments, optionally in combination with one or more of the preferred embodiments described above, the method of the first aspect of the invention is one which satisfies at least one, preferably all, of the following conditions:

(i) step (a) is carried out in a polar protic solvent that is trifluoroethanol,

(ii) the catalytically active compound or precursor thereof of step (a) is an oligomer of formula (Ia)

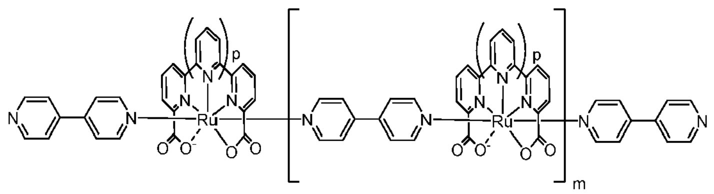

(Ia)

wherein m is from 1 to 14; preferably, m is 3, 4, 9 or 14;

p is 0 or 1 such that the dashed bond represents a single bond when p is 0; and

wherein each ruthenium atom is further optionally bonded to an oxo ligand (O), an hydroxo ligand (OH) or an aqua ligand ($H_2O$); or a macrocycle of formula (I'a)

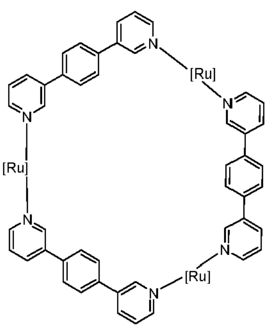

wherein each [Ru] represents a moiety of formula

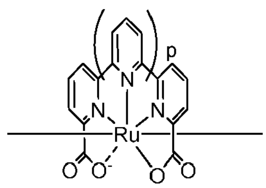

(I'a)

and wherein p is 0 or 1 such that the dashed bond represents a single bond when p is 0; and

wherein each ruthenium atom is further optionally bonded to an oxo ligand (O), an hydroxo ligand (OH) or an aqua ligand ($H_2O$);

(iii) the mixture of step (b) comprises a solvent that is tetrahydrofuran,
(iv) the solid material of step (b) is graphite or carbon nanotubes.

In other preferred embodiments, optionally in combination with one or more of the preferred embodiments described above, the method of the first aspect of the invention allows preparing an electrocatalytically active electrode and further comprises the step (d) of depositing the mixture obtained in step (c) on a solid support suitable for an electrode, such that steps (a), (b) and (c) are as defined in any of the preferred embodiments described above and step (d) satisfies at least one, preferably all, of the following conditions:

(i) the support of step (d) is glassy carbon; and
(ii) the deposition step (d) is carried out by dropcasting or inkjet printing.

Said method advantageously allows preparing stable electrodes having a high density of electrocatalytically active sites, which results in more efficient electrocatalytic processes.

While the method of the first aspect of the invention has been used herein for the anchoring a catalytically active material, the skilled person will recognize that the method is suitable for the anchoring of any active material involving the use of metal coordination complexes as active sites. The method of the first aspect of the invention may thus be used for anchoring sensing coordination complexes, or RedOx active species for use in batteries.

The invention also relates to certain catalytically active compounds or precursors thereof that are particularly useful in the method of the first aspect of the invention. Thus, in a second aspect, the invention relates to an oligomer of formula (I)

$$L_1\text{-}ML_2\text{-}(L_1\text{-}ML_2)_n\text{-}L_1 \qquad (I)$$

or a macrocycle of formula (I')

$$*\text{-}(L_1\text{-}ML_2)_{n'}\text{-}* \qquad (I')$$

wherein:

in the compound of formula (I) n is an integer of from 1 to 50;
in the compound of formula (I') n' is an integer of from 2 to 10 and the bonds represented with asterisks * represent a bond connecting the left end of the formula (I') with the right end of the formula (I') and wherein M is a cationic metal selected from the group consisting of ruthenium optionally bonded to an oxo ligand (O), an hydroxo ligand (OH) or an aqua ligand ($H_2O$), iridium, iron, cobalt, copper, zinc, nickel, aluminium, molybdenum, rhodium, manganese, vanadium and chromium;
$L_1$ is a bidentate ligand suitable for bonding via dative bonding to two different atoms of M through two heteroatoms independently selected from the group consisting of O, N and S and consisting of a system of one to five saturated, unsaturated or aromatic rings, said rings being interconnected, bridged or fused, comprising from 5 to 6 members selected from the group consisting of C, CH, $CH_2$, N, NH, O and S; provided that at least two of the members are selected from N, NH, O and S, the members being optionally substituted at any available position with a radical selected from the group consisting of halo, ($C_1$-$C_6$)alkyl, ($C_1$-$C_6$)haloalkyl, ($C_1$-$C_6$)alkyloxy, cyano and nitro; and wherein, when the ring system comprises two interconnected rings, said interconnection further optionally takes place through a moiety selected from the group consisting of ($C_1$-$C_6$)alkyl, ($C_2$-$C_6$)alkenyl, carbonyloxy (-COO-), carbonylamino (-CONH-), sulfonylamido (-$SO_2$NH-), phenyl, biphenyl and a moiety of formula (A)

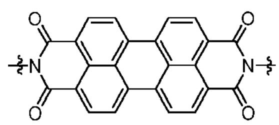

(A)

and
$L_2$ is a ligand of formula (II)

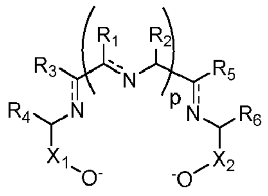

(II)

wherein p is 0 or 1;
each dashed bond represents a single or a double bond and wherein each one of the pairs $R_1$ and $R_2$, $R_3$ and $R_4$, $R_5$ and $R_6$, together with the atoms to which they are attached, independently form a ring system selected from the group consisting of pyrrole, pyridine, oxazole, thioxazole, indole and isoquinoline, said ring system being optionally substituted at any available position with a radical selected from the group consisting of halo, $(C_1$-$C_6)$alkyl, $(C_1$-$C_6)$haloalkyl, $(C_1$-$C_6)$alkyloxy, cyano and nitro, provided that at least two adjacent available positions in at least two of said ring systems is not substituted;
$X_1$ and $X_2$ are independently selected from the group consisting of carbonyl, sulfonyl and phosphoryl; and provided that the compound of the second aspect is not a compound of formula (I'a1-3)

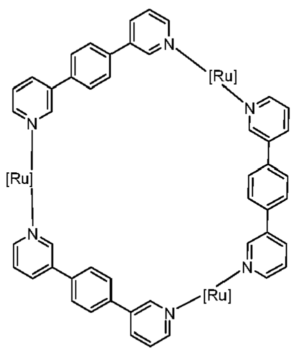

wherein each [Ru] represents a moiety of formula

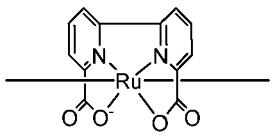

(I'a1-3)

In a preferred embodiment of the second aspect, the invention relates to a compound of formula (I) or of formula (I') as described above wherein in the compound of formula (I) n is an integer of from 3 to 14; and in the compound of formula (I') n' is 3; and wherein M, $L_1$ and $L_2$ are as defined above; and provided that the compound of the second aspect is not a compound of formula (I'a1-3) as defined above.

In a preferred embodiment of the second aspect, the invention relates to a compound of formula (I) or of formula (I') as described above wherein M is ruthenium optionally bonded to an oxo ligand (O), an hydroxo ligand (OH) or an aqua ligand ($H_2O$); and wherein n, n', $L_1$ and $L_2$ are as defined above.

In a preferred embodiment of the second aspect, the invention relates to a compound of formula (I) or of formula (I') as described above wherein $L_1$ is a bidentate ligand suitable for bonding via dative bonding to two different atoms of M through two N atoms and consisting of a system of one to four saturated, unsaturated or aromatic rings, said rings being interconnected, comprising from 5 to 6 members selected from the group consisting of C, CH, CH2, N, and NH; provided that at least two of the members are selected from N and NH; and wherein, when the ring system comprises at least two interconnected rings, said interconnection further optionally takes place through a moiety selected from the group consisting of $(C_1$-$C_6)$alkyl, phenyl, biphenyl and a moiety of formula (A) as defined above; and wherein n, n', M and $L_2$ are as defined above.

In a preferred embodiment of the second aspect, the invention relates to a compound of formula (I) or of formula (I') as described above wherein $L_1$ is selected from the group consisting of triethylenediamine, tri(pyridin-4-yl)methane, 1,3,5-tri(pyridin-4-yl)benzene, 1,3,5-tri(4-(pyridin-4-yl)phen-1-yl)benzene, 2,4,6-tri(pyridine-4-yl)-1,3,5-triazine, pyrazine and bipyridine wherein the pyridine rings are optionally interconnected through a moiety selected from the group consisting of $(C_1$-$C_6)$alkyl phenyl, biphenyl and a moiety of formula (A) as defined above; and wherein n, n', M and $L_2$ are as defined above.

In a preferred embodiment of the second aspect, the invention relates to a compound of formula (I) or of formula (I') as described above wherein $L_1$ is 4,4'-bipyridine or 1,4-di(pyridin-3-yl)benzene; and wherein n, n', M and $L_2$ are as

defined above.

In a preferred embodiment of the second aspect, the invention relates to a compound of formula (I) or of formula (I') as described above wherein $L_2$ is a ligand of formula (II)

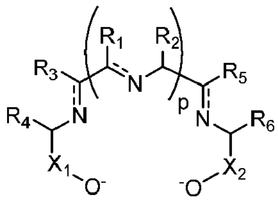

(II)

wherein p is 0 or 1;
each dashed bond represents a single or a double bond and wherein each one of the pairs $R_1$ and $R_2$, $R_3$ and $R_4$, $R_5$ and $R_6$, together with the atoms to which they are attached, independently form a pyridine ring system optionally substituted at any available position with a radical selected from the group consisting of halo, $(C_1\text{-}C_6)$alkyl, $(C_1\text{-}C_6)$haloalkyl, $(C_1\text{-}C_6)$alkyloxy, cyano and nitro, provided that at least two adjacent available positions in at least two of said ring systems is not substituted;
$X_1$ and $X_2$ are independently selected from the group consisting of carbonyl, sulfonyl and phosphoryl, and wherein n, n', M and $L_1$ are as defined above.

In a preferred embodiment of the second aspect, the invention relates to a compound of formula (I) or of formula (I') as described above wherein $L_2$ is a ligand of formula (II)

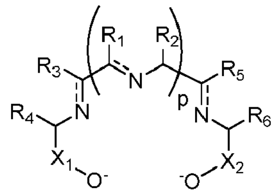

(II)

wherein p is 0 or 1;
each dashed bond represents a single or a double bond and wherein each one of the pairs $R_1$ and $R_2$, $R_3$ and $R_4$, $R_5$ and $R_6$, together with the atoms to which they are attached, independently form a pyridine ring system; $X_1$ and $X_2$ are independently selected from the group consisting of carbonyl, sulfonyl and phosphoryl, and wherein n, n', M and $L_1$ are as defined above.

In a preferred embodiment of the second aspect, the invention relates to a compound of formula (I) or of formula (I') as described above wherein $L_2$ is selected from (tda) and (bda)

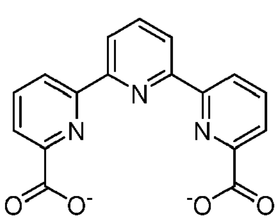

(tda)

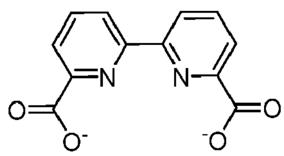

(bda)

and wherein n, n', M and $L_1$ are as defined above.

In a preferred embodiment of the second aspect, the invention relates to a compound of formula (Ia) as described above in the first aspect of the invention.

A method for the preparation of a compound according to the second aspect of the invention is also part of the invention. Said method comprises the step of contacting a monometallic coordination complex comprising a moiety of formula ML2, such as a compound of formula ML2SX where S is a solvent molecule and X is selected from a solvent molecule or halo, with a ligand $L_1$, where M, $L_1$ and $L_2$ are as defined above, in the presence of a polar protic solvent such as trifluoroethanol, wherein the molar ratio of the monometallic coordination complex to the ligand $L_1$ is comprised from 0.8:1 to 1:0.8 and is preferably 1:1.

The preparation of a compound according to the second aspect of the invention wherein M is ruthenium may preferably be carried out using a compound a monometallic coordination complex of formula $RuL_2$(dmso)X, wherein dmso is a dimethylsulfoxido ligand and X is selected from methanol, chloro, dmso and aqua ligand, being $L_2$ and $L_1$ as defined above. More preferably, the monometallic coordination complex is of formula $RuL_2$(dmso)($H_2O$). It is further preferred that, in the compound of formula $RuL_2$(dmso)($H_2O$), $L_2$ is a compound of formula (II) as defined above in the second aspect of the invention. It is even more preferred that $L_2$ is a compound of formula (tda) or (bda) as defined above. Similarly, it is preferred that $L_1$ is as defined in any of the preferred embodiments of the second aspect of the invention.

The method of the first aspect of the invention allows preparing a composition comprising a catalytically active compound, or a precursor thereof, that is anchored on the surface of a solid material via non-covalent interactions as defined above. A third aspect of the invention thus relates to a composition comprising the supramolecular assembly of a catalytically active material or a precursor thereof with a solid material, wherein the catalytically active material or the precursor thereof and the solid material are as defined in the first aspect of the invention. Said composition may either be a suspension suitable for deposition by drop-casting or inkjet printing or a solid body suitable for use as a catalyst or electrocatalyst in chemical transformations. The mixture and composition resulting from step (c) of the method of the first aspect of the invention are each an embodiment of the third aspect of the invention.

It is further preferred that the catalytically active material or the precursor thereof of the composition of the third aspect of the invention is as defined in any of the preferred embodiments related to step (a) of the first aspect of the invention. In particular, the catalytically active material or the precursor thereof is preferably a compound of formula (I) or of formula (I') as defined above wherein M, $L_1$ and $L_2$ are as defined in any of the preferred embodiments of the first aspect of the invention described above. More particularly, the composition of the third aspect of the invention comprises the supramolecular assembly of a catalytically active material or a precursor thereof with a solid material, wherein the catalytically active material or the precursor thereof is one of formula (I) or (I') wherein:

$L_2$ is selected from the compounds of formulae (tda), (bda), (II) and (II') as defined above in the first aspect of the invention,
M is a cationic metal selected from the group consisting of ruthenium optionally bonded to an oxo ligand (O), an hydroxo ligand (OH) or an aqua ligand ($H_2O$), iron, cobalt, copper, zinc, nickel, aluminium, molybdenum, manganese, vanadium and chromium; and
$L_1$ is a bidentate ligand suitable for bonding via dative bonding to two different atoms of M through two N atoms and consisting of a system of one to four saturated, unsaturated or aromatic rings, said rings being interconnected, comprising from 5 to 6 members selected from the group consisting of C, CH, CH2, N, and NH; provided that at least two of the members are selected from N and NH; and wherein, when the ring system comprises at least two interconnected rings, said interconnection further optionally takes place through a moiety selected from the group consisting of ($C_1$-$C_6$)alkyl, phenyl, biphenyl and a moiety of formula (A) as defined above.

Even more particularly, the composition of the third aspect of the invention comprises the supramolecular assembly of a catalytically active material or a precursor thereof with a solid material, wherein the catalytically active material or the precursor thereof is one of formula (I) or (I') wherein:

$L_2$ is selected from the compounds of formulae (tda) and (bda),
M is ruthenium optionally bonded to an oxo ligand (O), an hydroxo ligand (OH) or an aqua ligand ($H_2O$); and
$L_1$ is selected from the group consisting of triethylenediamine, tri(pyridin-4-yl)methane, 1,3,5-tri(pyridin-4-yl)benzene, 1,3,5-tri(4-(pyridin-4-yl)phen-1-yl)benzene, 2,4,6-tri(pyridine-4-yl)-1,3,5-triazine, pyrazine and bipyridine wherein the pyridine rings are optionally interconnected through a moiety selected from the group consisting of ($C_1$-$C_6$)alkyl, phenyl, biphenyl and a moiety of formula (A) as defined above; preferably, $L_1$ is 4,4'-bipyridine or 1,4-di(pyridin-3-yl)benzene.

It is further preferred that the solid material of the composition of the third aspect of the invention is as defined in any of the preferred embodiments related to step (b) of the first aspect of the invention. More particularly, the composition of the third aspect of the invention comprises the supramolecular assembly of a catalytically active material or a precursor thereof with a solid material, wherein the solid material is selected from the group consisting of graphite, graphene,

reduced graphene oxide and carbon nanotubes; more preferably, the solid material is selected from the group consisting of graphite and carbon nanotubes, wherein said carbon nanotubes are further optionally deposited onto a conductive solid material such as conductive metal oxides, for instance ITO or FTO.

Such composition may be obtained according to the method of the first aspect of the invention.

The composition of the third aspect of the invention may be particularly useful as active material in an electrode when the catalytically active compound is electrocatalytically active. The fourth aspect of the invention thus relates to an electrode comprising a composition according to the third aspect of the invention which comprises the supramolecular assembly of an electrocatalytically active material as defined above or a precursor thereof with an electron conductive material, wherein said composition is deposited onto an electrode support. In particular, the electrode of the fourth aspect of the invention comprises a composition as defined in the third aspect of the invention where the catalytically active material or the precursor thereof comprises a plurality of moieties of formula -($L_1$-$ML_2$)-, preferably it is a compound of formula (I) or (I') as defined above, wherein M is ruthenium optionally bonded to an oxo ligand (O), an hydroxo ligand (OH) or an aqua ligand ($H_2O$), iridium, cobalt, aluminium, molybdenum, vanadium, manganese and iron; preferably M is ruthenium optionally bonded to an oxo ligand (O), an hydroxo ligand (OH) or an aqua ligand ($H_2O$).

In preferred embodiments of the fourth aspect of the invention, the electrode of the fourth aspect of the invention comprises a composition as defined in the third aspect of the invention where the catalytically active material or the precursor thereof comprises a plurality of moieties of formula -($L_1$-$ML_2$)-, preferably it is a compound of formula (I) or (I') as defined above, wherein $L_2$ is selected from the compounds of formula (II), (II'), (tda) and (bda); preferably, $L_2$ is (tda) or (bda).

In preferred embodiments of the fourth aspect of the invention, the electrode of the fourth aspect of the invention comprises a composition as defined in the third aspect of the invention wherein the catalytically active material or the precursor comprises a plurality of moieties of formula -($L_1$-$ML_2$)-, preferably it is a compound of formula (I) or (I') as defined above, wherein $L_1$ is a bidentate ligand suitable for bonding via dative bonding to two different atoms of M through two N atoms and consisting of a system of one to four saturated, unsaturated or aromatic rings, said rings being interconnected, comprising from 5 to 6 members selected from the group consisting of C, CH, $CH_2$, N, and NH; provided that at least two of the members are selected from N and NH; and wherein, when the ring system comprises at least two interconnected rings, said interconnection further optionally takes place through a moiety selected from the group consisting of ($C_1$-$C_6$)alkyl, phenyl, biphenyl and a moiety of formula (A) as defined above; preferably, $L_1$ is selected from the group consisting of triethylenediamine, tri(pyridin-4-yl)methane, 1,3,5-tri(pyridin-4-yl)benzene, 1,3,5-tri(4-(pyridin-4-yl)phen-1-yl)benzene, 2,4,6-tri(pyridine-4-yl)-1 ,3,5-triazine, pyrazine and bipyridine wherein the pyridine rings are optionally interconnected through a moiety selected from the group consisting of ($C_1$-$C_6$)alkyl, phenyl, biphenyl and a moiety of formula (A) as defined above; more preferably, $L_1$ is 4,4'-bipyridine or 1,4-di(pyridin-3-yl)benzene.

In more preferred embodiments of the fourth aspect of the invention, the electrode of the fourth aspect of the invention comprises a composition as defined in the third aspect of the invention wherein the catalytically active material or the precursor thereof of the composition is one of formula (Ia) or (I'a) as defined above.

In preferred embodiments of the fourth aspect of the invention, the electrode of the fourth aspect of the invention comprises a composition as defined in the third aspect of the invention wherein the electron conductive material is selected from the group consisting of conducting metal oxides and carbonaceous materials. It is further preferred that the electron conductive material is a carbonaceous material as defined above; preferably, the electron conductive material is carbon nanotubes.

In preferred embodiments of the fourth aspect of the invention, the electrode of the fourth aspect of the invention comprises a composition as defined above that is deposited on a support suitable for an electrode. Supports suitable for electrodes are known in the art and include conductive metal oxides, such as ITO or FTO, metals, alloys and glassy carbon. It is further preferred that the support is conductive metal oxides or glassy carbon.

Such an electrode may be prepared following the method of the first aspect of the invention allowing for the preparation of an electrode and as described above.

The electrode of the fourth aspect of the invention may be incorporated into a device, such as an electrolyser or a fuel cell. It is a further aspect of the invention to provide a device comprising an electrode according to the fourth aspect of the invention.

An electrolyser and a fuel cell typically comprise two electrodes connected by a conducting wire and an electrolyte closing an electrical circuit.

The electrode of the fourth aspect of the invention is particularly useful for the oxygen evolution reaction, particularly when the electrocatalytically active material comprises the compound of formula (Ia) or (I'a) anchored on carbon nanotubes as defined above. Thus, in particular embodiments of the fifth aspect of the invention, the device comprising an electrodes according to the fourth aspect of the invention is an electrolyser, more particularly a water electrolyser. In such a device, the electrode according to the fourth aspect of the invention is preferably an anode.

In particular embodiments, the device of the fifth aspect of the invention is a water electrolyser comprising an anode consisting of an electrode according to any of the preferred embodiments of the fourth aspect of the invention, a

cathode comprising an electrocatalytically active material suitable for the hydrogen evolution reaction, and an electrolyte. Electrocatalytically active materials suitable for the hydrogen evolution reaction are known in the art and may be selected from the materials described in J. Mater. Chem. A, 2019, 7, 14971-15005, page 14977, Table 1, column 2, incorporated herein by reference. The electrolyte medium is preferably an aqueous solution of pH comprised between 1 and 14. Preferably, the electrolyte is an aqueous solution, such that the pH of the solution is about 7; preferably 7. The cathode and anode are preferably connected through a copper wire. A potential may be applied on each electrode. Said potential may be originated by a power source, such as a power line, a battery or a solar cell. When a solar cell is used, the device advantageously allows producing hydrogen at the cathode in a sustainable manner, using water and light as raw materials. Suitable solar cells for the device of the invention include silicon-based solar cells, perovskite-based solar cells and multi-junction solar cells. The production of hydrogen using such a device goes through the production of oxygen at the anode and the production of hydrogen at the cathode.

Thus, a sixth aspect of the invention relates to a process for the oxidation of water comprising the steps of:

(a) providing an electrode as defined in the fourth aspect of the invention wherein the catalytically active material or a precursor thereof is such that M is ruthenium optionally bonded to an oxo ligand (O), an hydroxo ligand (OH) or an aqua ligand ($H_2O$);
(b) when in the electrode of step (a) M is not bonded to an oxo ligand (O), an hydroxo ligand (OH) or an aqua ligand ($H_2O$); activating the electrode of step (a) such that the catalytically active material comprises at least a population of ruthenium atoms bonded to an oxo ligand (O), an hydroxo ligand (OH) or an aqua ligand ($H_2O$),
(c) contacting the electrode of step (a) or (b) comprising at least a population of ruthenium atoms bonded to an oxo ligand (O), an hydroxo ligand (OH) or an aqua ligand ($H_2O$) with water while applying a potential sufficient to provoke the production of oxygen.

Step (a) of the process of the sixth aspect of the invention preferably consists in providing an electrode as defined in any of the preferred embodiments of the fourth embodiment of the invention wherein the catalytically active material or a precursor thereof is such that M is ruthenium optionally bonded to an oxo ligand (O), an hydroxo ligand (OH) or an aqua ligand ($H_2O$); and wherein $L_2$ is selected from the compounds of formulae (II), (II'), (tda) and (bda); and $L_1$ is selected from the group consisting of triethylenediamine, tri(pyridin-4-yl)methane, 1,3,5-tri(pyridin-4-yl)benzene, 1,3,5-tri(4-(pyridin-4-yl)phen-1-yl)benzene, 2,4,6-tri(pyridine-4-yl)-1,3,5-triazine, pyrazine and bipyridine wherein the pyridine rings are optionally interconnected through a moiety selected from the group consisting of ($C_1$-$C_6$)alkyl, phenyl, biphenyl and a moiety of formula (A) as defined above; more preferably, $L_1$ is 4,4'-bipyridine or 1,4-di(pyridin-3-yl)benzene. More preferably, step (a) consists in providing an electrode as defined on the fourth embodiment of the invention wherein the catalytically active material or a precursor thereof is a compound of formula (Ia) or (I'a) as defined above that is preferably anchored on the surface of carbon nanotubes.

Step (b) of the method of the sixth aspect of the invention may comprise applying a potential to an electrode as provided in step (a) placed in an aqueous solution at basic pH, preferably at pH 12. This activation method in step (b) is preferred when $L_2$ is (tda) in the catalytically active material. Alternatively, step (b) of the method of the sixth aspect of the invention may comprise carrying out repetitive cyclic voltammetry to an electrode as provided in step (a) placed in an aqueous solution at neutral pH. This activation method in step (b) is preferred when $L_2$ is (bda) in the catalytically active material.

Step (c) of the process of the sixth aspect of the invention may be carried out at a pH value of between 1 and 14. It is however preferred that step (c) is carried out at pH 7 since such a process does not generate basic or acidic waste. More particularly, when the electrode comprises a catalytically active material or a precursor thereof that is a compound of formula (Ia) or (I'a) as defined above, step (c) can be surprisingly carried out at pH 7 with no specific loss of efficiency of the catalytic system. This results in an efficient and sustainable procedure for the oxidation of water. The water oxidation process may thus reach current densities of at least 0.2 $A/cm^2$ at a potential of 1.86 V vs RHE, even at neutral pH.

It is further preferred that the process of the sixth aspect of the invention satisfies at least one of the following conditions:

(i) the electrode comprises a compound of formula (Ia) or of formula (I'a) as defined above;
(ii) step (c) is carried out at neutral pH;
(iii) the process yields a current density of at least 0.2 $A/cm^2$ at a potential of 1.86 V vs RHE.

Throughout the description and claims the word "comprises" and variations of the word, are not intended to exclude other technical features, additives, components or steps. Furthermore, the word "comprise" encompasses the case of "consisting of". Additional objects, advantages and features of the invention will become apparent to those skilled in the art upon examination of the description or may be learned by practice of the invention. The following examples

are provided by way of illustration, and they are not intended to be limiting of the present invention. Furthermore, the present invention covers all possible combinations of particular and preferred embodiments described herein.

## EXAMPLES

General procedures

Materials: All the chemicals used in this work were provided by Sigma Aldrich and they have been used without further purification unless explicitly indicated. $RUCl_3 \cdot \times H_2O$ was purchased from Alfa-Aesar, 6,6'-Dicarboxylicacid-[2,2':6',2"-terpyridyl] (H2tda), the precursor complexes $[RuCl_2(dmso)_4]$ and $[Ru(tda)(dmso)(H_2O)]$ were prepared according to the procedure reported in Inorg. Chem. 2018, 57, 1757-1765 on page 1758 (incorporated herein by reference). Multi-Walled Carbon Nanotubes (MWCNTs) were purchased from HeJi, Inc. (Zengcheng city, China) in bulk with >95% purity, >50 nm OD and -10 μm length. Solvents were dried with a SPS® system and degassed by bubbling nitrogen before starting the reactions. High purity de-ionized water used for the electrochemistry experiments was obtained by passing distilled water through a nanopure Mili-Q water purification system. SIGRADUR® GC plate electrodes (GCp) 20x10x0.18 mm, were purchased from HTW, Germany.

Instrumentation: Bruker Avance 400 MHz and/or 500 MHz were used to carry out NMR spectroscopy. All the measurements were carried out at room temperature in the corresponding deuterated solvent using residual protons as internal reference. ESI-Mass spectra were recorded using micromass Q-TOF mass spectrometer. The pH of the solutions was determined by a pH meter (CRISON, Basic 20+) calibrated before measurements through standard solutions at pH 4.0, 7.0 and 9.2.

Electrochemical Methods: All the electrochemical experiments were performed in an IJ-Cambria CHI-660 potentiostat. Either a glassy carbon disk (GC, $\phi$ = 0.3 cm, S = 0.07 $cm^2$) or a glassy carbon plate (GCp, 20 mm x 10 mm x 0.18 mm) were used as working electrode (WE). In the case of GCp the surface dipped in the electrochemical solution was 1 $cm^2$. A Pt disk ($\phi$ = 0.2 cm, S = 0.03 cm2) was used as counter electrode (CE) and a $Hg/Hg_2SO_4$ ($K_2SO_4$ sat.) was used as reference electrode (RE). For bulk electrolysis experiments a $Hg/Hg_2SO_4$ ($K_2SO_4$ sat.) or a Ag/AgCl (KCl sat.) were used as RE and a Pt mesh as a CE. In aqueous media, phosphate buffers (phbf) solutions were used with an Ionic Strength (*I*) of 0.1 or 1.0 M. When needed the pH was adjusted using small amounts of 1 M NaOH or 0.1 M $CF_3SO_3H$ aqueous solutions. All the potentials reported herein have been converted to RHE by using the formula: $E(RHE) = E + 0.059pH + E°(Hg/Hg_2SO_4)$. Where, *E is* the working potential and $E°(Hg/Hg_2SO_4)$ = 0.65 V at 25 ºC. Preparation of different phbf using Mili-Q water up to 1 L: a) *pH 2, I = 0.1 M:* $H_3PO_4$ (0.104 mol, 10.19 g) and $NaH_2PO_4$ (0.0955 mol, 11.45 g), b) *pH 7, I = 0.1 M:* $NaH_2PO_4$ (0.019 mol, 2.32 g) and $Na_2HPO_4$ (0.027 mol, 3.78 g), c) *pH 7, I = 1.0 M:* $NaH_2PO_4$ (0.153 mol, 18.31 g) and $Na_2HPO_4$ (0.282 mol, 40.07 g), d) *pH 12, I = 0.1* M: $Na_2HPO_4$ (0.0073 mol, 1.04 g) and $Na_3PO_4$ (0.013 mol, 2.07 g).

*Cyclic Voltammetry (CV).* In a typical CV experiment, a 20 mL vial was used as an electrochemical cell. A home-made Teflon cap with holes for the three electrodes was used as a lid to ensure the same electrode disposition. The scan rate was 100 $mV \cdot s^{-1}$ unless otherwise stated. The resistance of the cell was typically 3-30 Ω and iR compensation was applied at 90% when the current density was above 10 $mA \cdot cm^{-2}$. *Controlled Potential Electrolysis.* CPE experiments were carried out in phbf at pH 7 at $E_{app}$ = 1.86 V *vs.* RHE in a 10 mL two compartment H-Cell separated with a frit. In one compartment was situated the WE and RE together with a magnetic stirring bar. The other compartment contained the CE.

*Oxygen Evolution*: Oxygen evolution generated during CPE experiments was monitored in the gas phase using a Clark electrode (Unisense Ox-N needle microsensor) situated at the working electrode compartment.

*Surface coverage (Γ):* The surface coverage for anchored complexes was calculated from cyclic voltammetric experiments following the equations:

$$\Gamma\ (mol \cdot cm^{-2}) = \frac{Q_{av}}{n \cdot S \cdot F} \qquad (S1)$$

$$Q_{av} = \frac{Q_{ap\ Ru^{III/II}} + Q_{cp\ Ru^{III/II}} + Q_{ap\ Ru^{IV/III}} + Q_{cp\ Ru^{IV/III}}}{4} \qquad (S2)$$

where $Q_{av}$ is average of the charge under anodic ($Q_{ap}$) and cathodic ($Q_{cp}$) peaks for RuIII/II and RuIV/III electron transfer

processes, obtained by integration in the CV. n is the number of electrons involved in each oxidation process, which is 1 for both waves. S is the geometric surface area of the electrode (GC, S = 0.07 $cm^2$ and GCp, S = 1 $cm^2$) and F is Faradaic constant. The average coverage of the complex was estimated from 5 independent experiments.

Preparative Example 1: Synthesis of compounds comprising a plurality of moieties of formula -($L_1$-$ML_2$)-

All the reactions were carried out under nitrogen atmosphere and the subsequent work up operations under air.

*Preparation of {[Ru(tda)(4,4'-bpy)]$_m$(4,4'-bpy)}, (Ia1-2, Ia1-4)*

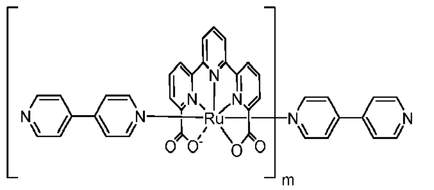

(Ia1-2) m=2
(Ia1-4) m=4

(Ia1)

In a 100 mL two neck round bottomed flask were placed 100 mg (0.2 mmol) of [Ru(tda)(dmso)($OH_2$)] and 47 mg (0.3 mmol) of 4,4'-bipyridine. Then 20 mL of degassed MeOH/$H_2O$ (3:2) were added to dissolve the starting compounds and the resulting solution was refluxed for 3 days. Afterwards, the reaction mixture was cooled down to room temperature affording a dark-red precipitate, which was filtered through a frit, washed with MeOH, $H_2O$, acetone and $Et_2O$ and dried under vacuum. This afforded pure compound of formula Ia1-4 wherein m is 4, as a brown-red solid. The red filtrate collected during the first filtration was evaporated to dryness and the resulting brown-red solid was dissolved in the minimum amount of DCM/MeOH (10:1). Then a column chromatography was carried out in silica as a support and DCM/MeOH (1:1) as eluent. The first brown reddish fraction corresponds to the compound of formula Ia1 where m is 1. A second deep-red fraction was collected using DCM/MeOH (1:4) as eluent yielding the dimeric complex Ia1-2 wherein m is 2.

**Ia1-1.** Yield: 30 mg, 0.04 mmol (20%). $^1$H-NMR (500 MHz, [$d_4$]-MeOD) $\delta$: 8.71 (d, *J*= 8.05 Hz, 2H), 8.60(dd, *J*= 4.87 and 1.59 Hz, 4H), 8.56 (d, *J*= 7.92 Hz, 2H), 8.32 (dd, *J*= 5.52 and 1.45 Hz, 4H), 8.16 (t, *J*= 8.25 Hz, 1H), 8.10 (d, *J*= 7.64 Hz, 2H), 8.06 (t, *J*= 7.72 Hz, 2H), 7.64 (dd, *J*= 4.92 and 1.59 Hz, 4H), 7.52 (dd, *J*= 5.55 and 1.44Hz, 4H). $^{13}$C-NMR (125 MHz, [$d_4$]-MeOD) $\delta$: 170.8, 161.9, 158.1, 157.0, 153.2, 149.7, 145.5, 144.5, 136.8, 132.7, 126.5, 124.0, 123.9, 122.2, 121.5. (+)-HRMS-ESI (MeOH). Calc. for [M+H]+, ($C_{37}H_{26}N_7O_4Ru$): 734.1012, found 734.1117. Elemental Analysis calc. for $C_{37}H_{25}N_7O_4Ru\cdot 1.8\ C_2H_2OF_3\cdot 4\ H_2O$: C, 49.5; H, 3.9; N, 10.0, found (%): C, 49.6; H, 4.0; N, 9.8.

**Ia1-2.** Yield: 15 mg, 0.01 mmol (6%). $^1$H-NMR (500 MHz, [$d_4$]-MeOD) $\delta$: 8.71 (d, *J*= 7.97 Hz, 4H), 8.65 (dd, *J*= 4.71 and 1.65 Hz, 4H), 8.56 (d, *J*= 7.67 Hz, 4H), 8.34 (dd, *J*= 5.53 and 1.35 Hz, 4H), 8.29 (dd, *J*= 5.68 and 1.47 Hz, 4H), 8.17 (t, *J*= 8.09 Hz, 2H), 8.13 (m, 4H), 8.08 (t, *J*= 7.82 Hz, 4H), 7.67 (dd, *J*= 4.84 and 1.64 Hz, 4H), 7.54 (dd, *J*= 5.50 and 1.52 Hz, 4H), 7.31 (dd, *J*= 5.54 and 1.49 Hz, 4H). $^{13}$C-NMR (125 MHz, [$d_4$]-MeOD) $\delta$: 170.9, 162.0, 160.0, 157.9, 157.4, 153.2, 153.0, 149.7, 145.5, 144.4, 143.9, 136.8, 132.8, 126.6, 123.9, 123.8, 122.2, 121.5. (+)-HRMS-ESI (MeOH). Calc. for [M/2+$Na^+$], ($C_{32}H_{21}N_6O_4Ru$+Na+): 678.0668, found 678.0588. Elemental Analysis calc. for $C_{64}H_{42}N_{12}O_8Ru_2\cdot 7\ C_2H_2OF_3\cdot 6\ H_2O$: C, 44.2; H, 3.6; N, 8.0, found (%): C, 44.0; H, 3.6; N, 8.5.

**Ia1-4.** Yield: 45 mg, 0.02 mmol (37%). $^1$H-NMR (500 MHz, [$d_2$]-DCM/[$d_3$]-TFE (4:1)) $\delta$: 8.54 (d, *J* = 5.68 Hz, 4H), 8.34 (m, 8H), 8.20 (d, *J*=8.87 Hz, 4H), 8.17 (d, *J*=6.61, 8H), 8.11-7.98 (m, 24H), 7.92 (t, *J*=7.10 Hz, 4H), 7.87 (t, *J*=7.24 Hz 4H), 7.44 (d, *J*=5.06 Hz, 4H), 7.29 (d, *J*=6.18, 4H), 7.08 (m, 8H), 7.05 (m, 4H. Elemental Analysis calc. for $C_{118}H_{76}N_{22}O_{16}Ru_4\cdot 7\ C_2H_2OF_3\cdot 3\ H_2O$: C, 49.3; H, 3.2; N, 9.5, found (%): C, 49.5; H, 3.3; N, 9.2.

*Preparation of {[RuII(tda)(4,4'-bpy)]$_5$(4,4'-bpy)} - (Ia1-5):* compound of formula (Ia1) wherein m is 5. In a 100 mL two neck round bottomed flask were placed 100 mg (0.2 mmol) of [Ru(tda)(dmso)($OH_2$)] and 47 mg (0.3 mmol) of 4,4'-bipyridine. Then 20 mL of degassed trifluoroethanol (TFE) were added to dissolve the starting compounds and the resulting solution was refluxed for 3 days. Afterwards, the solution containing the reaction mixture was evaporated to dryness. Then MeOH was added to the resulting solid generating a red solution and a black solid. The latter was filtered through a frit and washed with copious amounts of MeOH, $H_2O$, acetone and $Et_2O$ and dried under vacuum. Yield: 60 mg, 0.02 mmol (49%). $^1$H-NMR (500 MHz, [$d_2$]-DCM/[$d_3$]-TFE (4:1)) $\delta$: 8.52 (d, *J*= 4.53 Hz, 4H), 8.37-8.28 (m, 10H), 8.21 (d, *J*= 7.98 Hz, 5H), 8.18-8.12 (3, 9H), 8.08 (d, *J*= 4.98 Hz, 8H), 8.05-7.96 (m, 23H), 7.93 (t, *J*= 7.71 Hz 5H), 7.88 (t, *J*= 7.51 Hz 5H), 7.45 (d, *J*= 4.64 Hz, 4H), 7.27 (d, *J*= 5.31, 4H), 7.06 (m, 8H), 7.03 (m, 8H). Elemental Analysis, calc. for $C_{145}H_{93}N_{27}O_{20}Ru_5\cdot 10\ C_2H_2OF_3\cdot 1\ H_2O$: C, 48.9; H, 3.1; N, 9.3, found (%): C, 48.8; H, 3.1; N, 9.6.

*Preparation of {[RuII(tda)(4,4'-bpy)$_{15}$(4,4'-bpy)} - (Ia1-15):* compound of formula (Ia1) wherein m is 15.

In a 100 mL two neck round bottomed flask were placed 100 mg (0.2 mmol) of [Ru(tda)(dmso)($OH_2$)] and 31.0 mg (0.2 mmol) of 4,4'-bipyridine. Then 20 mL of degassed TFE were added to dissolve the starting compounds and the resulting solution was refluxed for 3 days. Afterwards, the solution containing the reaction mixture was evaporated to dryness. Then MeOH was added to the resulting solid generating a red solution and a dark reddish solid. The latter was filtered through

a frit and washed with copious amounts of MeOH, $H_2O$, acetone and $Et_2O$ and dried under vacuum yielding a solid that contains 95% of the compound of formula Ia1-15 and 5% of the compound of formula [{$Ru_{II}$(tda)(DMSO)}$_2$(p-4,4'-bpy)] 1 (2.6:1 in molar ratio).

**Ia1-15:** Yield: 100 mg 68% (95 % **15** and 5% **1**). $^1$H-NMR (500 MHz, [$d_2$]-DCM/[$d_3$]-TFE (4:1)) *δ*: 8.48 (d, *J*= 5.4 Hz, 4H), 8.32-8.22 (m, 28H), 8.18-8.07 (m, 36H), 8.04 (d, *J*= 7.06 Hz, 16H), 8.02-7.92 (m, 79H), 7.89 (t, *J*= 7.75 Hz, 8H), 7.87-7.79 (m, 28H), 7.41 (d, *J*= 5.76 Hz 4H), 7.23 (d, *J*= 6.22 Hz, 4H), 14 7.06-6.91 (m, 56H).

**1**: Yield: 32 mg, 0.03 mmol (56%). $^1$H-NMR (500 MHz, [$d_2$]-DCM/[$d_3$]-TFE (4:1)) *δ*: 8.20 (d, *J*= 8.1 Hz, 4H), 8.11 (dd, *J*= 6.5, 2.6 Hz, 4H), 8.06 (t, *J*= 8.5, 2H), 8.00 (m, 8H), 7.81 (d, *J*= 7.0 Hz, 4H), 7.14 (d, *J*= 7.0 Hz, 4H), 2.67 (s, 12H).

*Preparation of ([Ru(bda)(4,4'-bpy)]$_{10}$(4,4'-bpy)}, (Ia2-10)* bda: 2,2'-bipyridine-6,6'-dicarboxylic acid

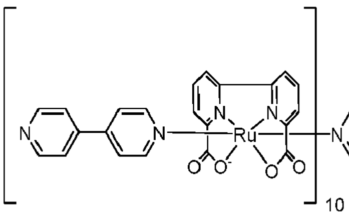

(Ia2-10)

A mixture of 50 mg (0.1 mmol) of [Ru(bda)(dmso)$_2$] and 15.6 mg (0.1 mmol) of 4,4'-bipyridine were placed in a 50 mL two-neck round bottom flask and degassed by vacuum-nitrogen cycles. Then, 10 mL of degassed TFE were added and the resulting solution was heated under nitrogen at 78 °C during 3 days. Afterwards, the solution containing the reaction mixture was evaporated to dryness and washed with DCM/MeOH (2:1) 5 x 5 mL. The remaining brownish solid was washed with $Et_2O$ and dried under vacuum yielding **10** as red-brown powder, which was stored under $N_2$ in the glove box.

Yield: 28 mg 56%. $^1$H-NMR (500 MHz, $d_3$-TFE) *δ*: 8.13 (d, *J*= 5.5 Hz, 4H), 8.07-7.94 (m, 20 H), 7.73-7.35 (m, 97 H), 7.12 (d, *J*= 5.6 Hz, 4H), 7.00 (d, *J*= 5.7 Hz, 4 H), 6.82 (m, Hz, 36H).

*[Ru(bda)*(1,4-di(pyridin-3-yl)benzene)*]$_3$*, (I'a1-3) was prepared following the procedure described in M. Schulze, V. Kunz, P. D. Frischmann, F. Würthner, Nat. Chem. 2016, 8, 576-583, incorporated herein by reference.

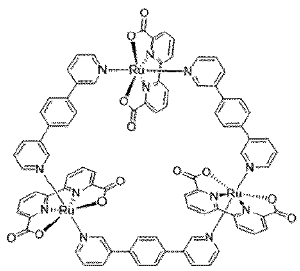

Example 1: Anchoring of compounds comprising a plurality of moieties of formula -($L_1$-$ML_2$)- onto carbon nanotubes

General procedure 1: A solution comprising a compound comprising a plurality of moieties of formula -($L_1$-$ML_2$)- as prepared in Preparative Example 1 was prepared by dissolving 1 mg of the oligomer compound in 1 mL of trifluoroethanol, thus providing solution A. A suspension B was prepared in parallel by sonication of 5 mg of MWCNTs (HeJi, Inc.) in 5 mL of tetrahydrofuran (THF) during 60 minutes. Afterwards, 0.1 mL of Solution A was added to 1 mL of Suspension B. Upon addition, the red color disappeared immediately from the solution indicating that oligomeric species are quickly anchored on MWCNT yielding suspension C.

Following general procedure 1, a suspension C which contains Ia1 -5@CNT or Ia1-15@CNT or Ia2-10@CNT or I'a1 -3@CNT was prepared.

FIG. 1 summarizes the method of anchoring the compounds comprising a plurality of moieties of formula $-(L_1-ML_2)-$ onto carbon nanotubes according to General Procedure 1.

FIG. 2 corresponds to microscopy images (STM) of compound (Ia1-15) deposited on a highly ordered pyrolytic graphite surface. The bright signatures in Figure 2, which are associated with the Ru-tda fragments of the polymer, are separated by approx. 1.11 nm, which is close to the 1.14 nm calculated distance between to Ru centers linked by the 4,4'-bpy bridging ligands. The 4,4'-bpy bridging ligands are not observed in the microscopy image, either due to the relatively small electron density associated with them or to their weak electronic coupling with the underlying surface. The oligomers are aligned parallel to one another with an average oligomer-oligomer distance of about 1.2 nm.

According to General Procedure 1, step (c) of the first aspect of the invention consists in adding a solution as provided in step (a) to a mixture as provided in step (b).

General Procedure 2: Solution A as described in General Procedure 1 is drop-casted on the surface of a solid material comprising CNTs deposited on its surface. New drops are added only after the last drop is totally dried on the substrate.

(Ia1-15)@CNT@FTO was prepared following general procedure 2 using as solid material glass coated with Fluorine-doped Tin Oxide (FTO) on the surface of which a suspension of MWCNTs (identical to suspension B from General Procedure 1) was drop-casted onto said surface.

(Ia1-15)@CNT@GC was also prepared following general procedure 2 using as solid material glassy carbon (GC) plates on the surface of which a suspension of MWCNTs (identical to suspension B from General Procedure 1) was drop-casted onto said surface.

According to general procedure 2, step (c) of the first aspect of the invention consists in depositing a solution as provided in step (a) onto the surface of a solid material.

$^1$H NMR studies revealed that the C-H atoms of two adjacent pyridine rings and opposite to the N atoms in each pyridine ring, both in tda and bda ligands, interact with the surface of CNTs, thus showing that the anchoring of these ligands on CNT surfaces takes place through C-H-$\pi$ interactions in such a manner that the plane formed by the aromatic ligand is orthogonal to the local plane of the CNT surface. This interaction positions the ruthenium atoms in such a manner that these are not facing the surface of the electrode. Such ruthenium atoms are thus available for engaging in catalytic reactions.

Example 2: Electrode preparation

General procedure 3: The suspension C obtained as a product of General Procedure 1 described in Example 1 was drop casted onto the surface of a support suitable for an electrode. New drops were added only after the last drop totally dried on the substrate.

Using glassy carbon disk or glassy carbon plate as solids, together with the products described in Example 1, and following general procedure 3, electrodes consisting of (Ia1-5)@CNT@GC or (Ia1-15)@CNT@GC or (Ia2-10)@CNT@GC or (I'a1-3)@CNT@GC were prepared.

General Procedure 2 described in Example 1 is also suitable for the preparation of an electrode. (Ia1-15)@CNT@FTO and (Ia1-15)@CNT@GC as described in Example 1 are suitable as electrodes.

The coverage of the surface of the electrodes prepared according to general procedure 1 was determined as described above and is disclosed in Table 1:

Table 1

| Electrode | Surface coverage T (nmol/cm$^2$) |
|---|---|
| (Ia1-5)@CNT@GC | 14 |
| (Ia1-15)@CNT@GC | 21 |
| (Ia2-10)@CNT@GC | 12 |
| (I'a1-3)@CNT@GC | 53.5 |

In the case of (Ia1-15)@CNT@GC, this surface coverage value corresponds to a coverage of 75% of the surface of the material with the compound of formula (Ia1-15). In the case of (Ia2-10)@CNT@GC, this surface coverage value corresponds to a coverage of 73% of the surface of the material with the compound of formula (Ia2-10).

The coverage of the surface of the electrodes prepared according to general procedure 2 was determined as described above and is disclosed in Table 2:

Table 2

| Electrode | Surface coverage T ($nmol/cm^2$) |
|---|---|
| (Ia1-15)@CNT@GC | 16 |
| (Ia1-15)@CNT@FTO | 6.2 |

Example 3: Activation of electrodes and electrocatalytic activity of (Ia1-5)@CNT@GC, (Ia1-15)@CNT@FTO, (Ia1-15)@CNT@GC, (Ia2-10)@CNT@GC, and (I'a1-3)@CNT@GC

General Procedure 4: The electrodes as prepared according to Example 2 were immersed in 0.1 M phbf solution (pH 12) in a one compartment cell and an $E_{app}$ = 1.68 V vs RHE for 1000 seconds was applied under constant stirring. Then an $E_{app}$ = 0 V was applied for 30 s. This procedure was used to generate (Ia1-5·$H_2O$)@CNT@GC or (Ia1-15·$H_2O$)@CNT@GC or (Ia1-15)@CNT@FTO. Afterwards the electrodes were rinsed with distilled water and dried at room temperature.

Repetitive cyclic voltammetry as described above may also be used to activate electrode (I'a1-3)@CNT@GC or (Ia2-10·$H_2O$)@CNT@GC.

The electrodes thus obtained are useful as anode in water hydrolysis processes.

FIG. 3 shows the Surface Raman Spectroscopy spectra of the following materials: (a) CNT@GC, (b) (Ia1-15), (c) (Ia1-15)@CNT@GC, (d) (Ia1-15·$H_2O$)@CNT@GC and (e) (Ia1-15·$H_2O$)@CNT@GC after controlled potential electrolysis (E = 1.86 V vs RHE in a 1 M phbf (pH 7) solution for 6 h). This figure shows that the catalytically active material is successfully anchored onto the surface of the solid material and that the anchoring survives the conditions of electrolysis.

Table 3 summarizes the electrochemical characterization data as measured for electrodes (Ia1-5)@CNT@GC, (Ia1-15)@CNT@GC, (Ia2-10)@CNT@GC and (I'a1-3)@CNT@GC by cyclic voltammetry carried out at pH 7. $\Gamma$ represents the surface coverage, while J represents the anodic current density (proportional to catalytic activity) as measured by Cyclic Voltammetry according to the procedure described above, E is the applied potential and TOF represents the turnover frequency.

Table 3

| Electrode composition | $\Gamma$ ($nmol\ cm^{-2}$) | $J$ ($mA \cdot cm^{-2}$) | Evs RHE (V) | TOF ($s^{-1}$) |
|---|---|---|---|---|
| (Ia2-10)($H_2O$)$_2$@CNT@GC | 16.7 | 256 | 1.45 | 3729 |
| (Ia1-5·$H_2O$)@CNT@GC | 9.5 | 190 | 1.45 | 8054 |
| (Ia1-15·$H_2O$)@CNT@GC | 17.5 | 240 | 1.45 | 8060 |
| (I'a1-3-activated)@CNT@GC | 53.5 | 186 | 1.45 | 3200 |

FIG. 4 represents the cyclic voltammetry curve obtained for (Ia1-15·$H_2O$)@CNT@GC in 1.0 M phosphate buffer (pH 7) at scan rate of 100 mV/s. FIG. 5 represents the cyclic voltammetry curves obtained for (I'a1-3)@CNT@GC before (plain line) and after (dashed line) a controlled potential electrolysis as described above. FIG. 6 represents the cyclic voltammetry curve obtained for (Ia2-10·($H_2O$)$_2$)@CNT@GC in 1.0 M phosphate buffer (pH 7) at scan rate of 100 mV/s. FIG. 7 represents the cyclic voltammetry curves obtained for (Ia1-5)@CNT@GC before (plain line) and after (dashed line) a controlled potential electrolysis as described above.

The above electrodes according to the invention are surprisingly highly efficient in water oxidation reactions, taking place in a broad range of pH and reaching higher values of current densities, since the electrodes described above show catalytic activity in a pH ranging from 1 to 14, in contrast with the electrodes described in the art. Thanks to the specific strong interactions between the ligand of the catalyst with the surface of the electrode, these electrodes do not deactivate over time due to leaching of the catalytically active species, which translates into large turnover numbers. In addition, the proximity of catalytic active sites on the surface provides a large density of active sites on the surface of the electrode, which in turn translates into high catalytic efficiency and high current densities if compared with the catalysts reported in the art. Impressively, (Ia1-15)@CNT@GC sustained current densities of 32 $mA/cm^2$ for 12 hours with practically no decay and generated overall TONs of $2x10^5$, yielding Faradaic efficiencies above 99%.

Example 4: Incorporation of (Ia1-15·$H_2O$) in a device for photo-induced hydrogen production

A device for the production of solar hydrogen was produced incorporated (Ia1-15·$H_2O$)@CNT@GC as prepared

according to Example 2.

Procedure: A two-compartments cell was filled with 6 mL phosphate buffer (pH 7, 1 M) at each compartment, and the electrolyte was also degassed with $N_2$ flow for 10-20 min after placing the anodes ((Ia1-15·$H_2O$)@CNT@GC as prepared according to Example 2 - general procedure 2) and cathodes (Pt cathode). The photocurrent generated during the light driven water splitting experiment was monitored with a CHI 620E potentiostat by performing a bulk electrolysis at 0 V bias, which works as an ammeter in this case. The PhotoVoltaic cells (PV, are illuminated by a 150 W Xenon lamp (LS-150, ABET technology) equipped with a filter to block UV light ($\lambda$ < 400 nm). The light intensity can be measured by using a calibrated silicon photodiode at 25 °C, and the illumination reaching the PV cells is tuned by using different ND filters depending on the desired current. 0.35-0.36 sun light intensity was used to illuminate a InGaP/GaAs/Ge triple junction solar cell (0.18 $cm^2$, purchased from Fullsuns Energy Technology Co., Ltd). Two metallic meshes were also used to obtain a large and uniform illumination. The cathode side of the PV cells was connected with the working lead of the potentiostat, while the reference and auxiliary leads are connected together to the cathode of the electrolyzer. Finally, an additional electrical wire was needed to connect the anode side of the PV cells to the anode of the electrolyzer. The resistance of this configuration was measured before starting the illumination, which was in the range of 210-240 $\Omega$. Once we turned on the light, the spontaneous water splitting was triggered. During the process the generated photocurrent was monitored through the potentiostat while the generated oxygen ($O_2$) and hydrogen (H2) gases were monitored through an $O_2$ sensitive OX-NP15127 Clark electrode (Unisense) and a H2 sensitive H2-NP706731 Clark electrode (Unisense), respectively.

FIG. 8 represents the evolution of photocurrent density vs. time of a PV-EC experiment under 0.35 sun illumination and at pH 7. FIG. 9 and 10 respectively represent oxygen and hydrogen evolution during irradiation of PV with 0.36 sun and water electrolysis carried out at pH 7. The dashed lines in indicate the gas generated calculated from the charge passed through the circuit, while the solid lines represent the measured gas using Clark probes.

The use of an electrode according to the invention is such a device advantageously allows producing hydrogen from light and water at pH 7 with a surprising sun to hydrogen yield of 21.1%, thus with an improved efficiency if compared with the devices described in the art. Similar experiments were carried out replacing the PV cell by perovskite-based photovoltaic cells, leading to sun to hydrogen yields of about 13.2%.

**CITATION LIST**

1. Matheu, R. et al. Chem. Rev. 2019, 119, 3453-3471.
2. Chen, Z et al. J. Am. Chem. Soc. 2009, 131, 15580-15581.
3. Jackson, M. N. et al. J. Am. Chem. Soc. 2018, 140, 1004-1010.
4. Francàs, L. et al. Chem. Eur. J. 2016, 22, 5261 - 5268.
5. Creus, J. et al. Angew. Chem. Int. Ed. 2016, 55, 15382 -15386.
6. Schulze, M. et. Al. Nat. Chem. 2016, 8, 576-583.


**Claims**

**1.** A method for preparing a solid-supported catalyst comprising the steps of:

(a) providing a solution comprising a catalytically active compound or a precursor thereof which comprises in its molecular formula a plurality of moieties comprising the active sites of the catalytically active compound and of formula -($L_1$-M$L_2$)- wherein M is a transition metal that is catalytically active; $L_1$ is a bidentate or tridentate ligand attached to M through an atom selected from the group consisting of O, N and S; and $L_2$ is a tridentate, tetradentate or pentadentate ligand attached to M through heteroatoms selected from O, N, P and S;
(b) providing a mixture or a support, said mixture or support comprising a solid material suitable for interacting through non-covalent interactions with the ligands $L_2$ in the catalytically active material of step (a);
(c) adding the solution of step (a) to the mixture of step (b) to produce a mixture, or depositing the solution of step (a) to the support of step (b) to produce a composition, thereby resulting in the catalytically active material, or the precursor thereof, being anchored on the surface of the solid material;

whereby at least a portion of the ligand $L_2$ is arranged for interacting with the surface of the solid material of step (b) through non-covalent interactions in such a way that substantially all the active sites in the metal coordination complexes interacting with the surface are not facing the surface of the solid material.

**2.** A method according to claim 1 wherein the catalytically active compound or the precursor thereof of step (a) is an electrocatalytically active compound or a precursor thereof which comprises in its molecular formula a plurality of moieties comprising the active sites of the electrocatalytically active compound and of formula $-(L_1\text{-}ML_2)-$ wherein M is a transition metal that is electrocatalytically active in one of its oxidized forms; $L_1$ is a bidentate or tridentate ligand attached to M through an atom selected from the group consisting of O, N and S; and $L_2$ is a tridentate, tetradentate or pentadentate ligand attached to M through heteroatoms selected from O, N and S; and the solid material of step (b) is an electron conductive material.

**3.** The method according to claim 1 or 2 wherein the catalytically active compound or precursor thereof of step (a) is an oligomer of formula (I)

$$L_1\text{-}ML_dL_1\text{-}ML_2)_n\text{-}L_1 \qquad (I)$$

or a macrocycle of formula (I')

$$*\text{-}(L_1\text{-}ML_2)_{n'}\text{-}* \qquad (I')$$

wherein:

in the compound of formula (I) n is an integer of from 1 to 50;
in the compound of formula (I') n' is an integer of from 2 to 10 and the bonds represented with asterisks * represent a bond connecting the left end of the formula (I') with the right end of the formula (I').

**4.** The method according to any one of claims 1 to 3 wherein:

M is a cationic metal selected from the group consisting of ruthenium optionally bonded to an oxo ligand (O), an hydroxo ligand (OH) or an aqua ligand ($H_2O$), iridium, iron, cobalt, copper, zinc, nickel, aluminium, molybdenum, rhodium, manganese, vanadium and chromium;
$L_1$ is a bidentate ligand suitable for bonding via dative bonding to two different atoms of M through two heteroatoms independently selected from the group consisting of O, N and S and consisting of a system of one to five saturated, unsaturated or aromatic rings, said rings being interconnected, bridged or fused, comprising from 5 to 6 members selected from the group consisting of C, CH, CH2, N, NH, O and S; provided that at least two of the members are selected from N, NH, O and S, the members being optionally substituted at any available position with a radical selected from the group consisting of halo, $(C_1\text{-}C_6)$alkyl, $(C_1\text{-}C_6)$haloalkyl, $(C_1\text{-}C_6)$alkyloxy, cyano and nitro; and wherein, when the ring system comprises two interconnected rings, said interconnection further optionally takes place through a moiety selected from the group consisting of $(C_1\text{-}C_6)$alkyl, $(C_2\text{-}C_6)$alkenyl, carbonyloxy (-COO-), carbonylamino (-CONH-), sulfonylamido ($-SO_2NH-$), phenyl, biphenyl and a moiety of formula (A)

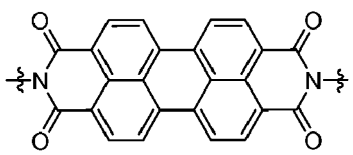

(A)

And $L_2$ is a ligand of formula (II)

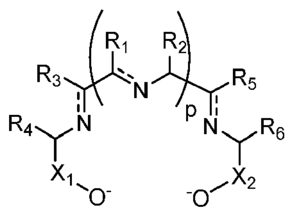

(II)

wherein p is 0 or 1;

each dashed bond represents a single or a double bond and wherein each one of the pairs $R_1$ and $R_2$, $R_3$ and $R_4$, $R_5$ and $R_6$, together with the atoms to which they are attached, independently form a ring system selected from the group consisting of pyrrole, pyridine, oxazole, thioxazole, indole and isoquinoline, said ring system being optionally substituted at any available position with a radical selected from the group consisting of halo, $(C_1\text{-}C_6)$alkyl, $(C_1\text{-}C_6)$haloalkyl, $(C_1\text{-}C_6)$alkyloxy, cyano and nitro, provided that at least two adjacent available positions in at least two of said ring systems is not substituted;

$X_1$ and $X_2$ are independently selected from the group consisting of carbonyl, sulfonyl and phosphoryl.

5. The method according to any one of claims 1 to 4 wherein the catalytically active compound or precursor thereof of step (a) is that wherein $L_1$ is 4,4'-bipyridine or 1,4-di(pyridin-3-yl)benzene.

6. The method according to any one of claims 1 to 5 wherein the catalytically active compound or precursor thereof of step (a) is that wherein M is ruthenium optionally bonded to an oxo ligand (O), an hydroxo ligand (OH) or an aqua ligand ($H_2O$).

7. The method according to any one of claims 1 to 6 wherein the catalytically active compound or precursor thereof of step (a) is an oligomer of formula (Ia)

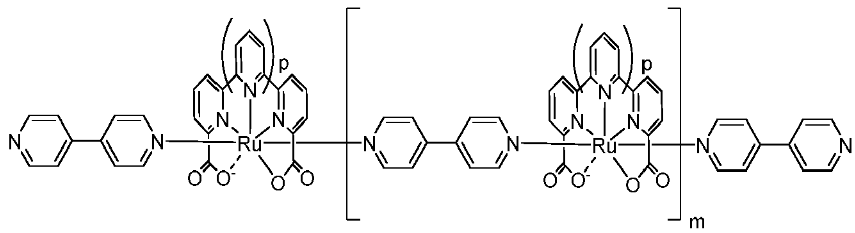

(Ia)

wherein m is from 1 to 14;

p is 0 or 1 such that the dashed bond represents a single bond when p is 0; and

wherein each ruthenium atom is further optionally bonded to an oxo ligand (O), an hydroxo ligand (OH) or an aqua ligand ($H_2O$); or a macrocycle of formula (I'a)

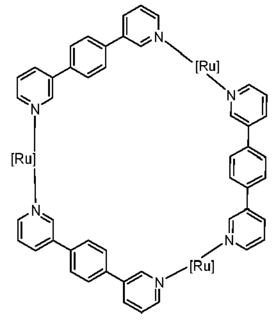

wherein each [Ru] represents a moiety of formula

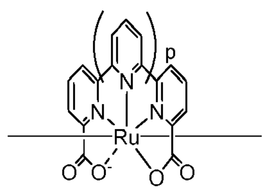

(I'a)

and wherein p is 0 or 1 such that the dashed bond represents a single bond when p is 0; and wherein each

ruthenium atom is further optionally bonded to an oxo ligand (O), an hydroxo ligand (OH) or an aqua ligand ($H_2O$); preferably, the catalytically active compound or precursor thereof of step (a) is an oligomer of formula (Ia) wherein m is 3, 4, 9 or 14.

**8.** The method according to any one of claims 1 to 7 wherein the solution of step (a) is a solution of a polar protic solvent.

**9.** The method according to any one of claims 1 to 8 wherein the solid material of the mixture of step (b) is a carbonaceous material; that is preferably graphite or carbon nanotubes.

**10.** The method according to any one of the claims 1 to 9 which satisfies at least one, preferably all, of the following conditions:

(i) step (a) is carried out in a polar protic solvent that is trifluoroethanol,
(ii) the catalytically active material, or the precursor thereof, of step (a) is as defined in any one of the claims 4 to 7,
(iii) the mixture of step (b) comprises a solvent that is tetrahydrofuran; or, alternatively, the support of step (b) is fluorine-doped tin oxide;
(iv) the solid material of step (b) is graphite or carbon nanotubes.

**11.** The method according to any one claims 2 to 10 for the preparation of an electrocatalytically active electrode further comprising the step (d) of depositing the mixture obtained in step (c) on a solid support suitable for an electrode, that is preferably selected from the group consisting of glassy carbon and conductive metal oxides; more preferably, said method satisfies at least one, preferably all, of the following conditions:

(v) the support of step (d) is glassy carbon; and
(vi) the deposition step (d) is carried out by dropcasting or inkjet printing.

**12.** Compound of formula (I) or of formula (I') as defined in claim 3 wherein M, $L_1$ and $L_2$ are as defined in claim 4, other than the compound of formula (I'a1-3)

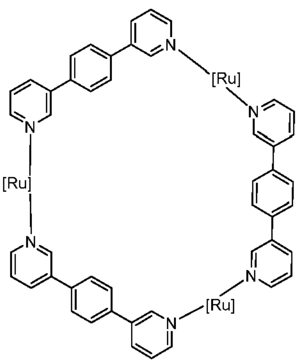

(I'a1-3)

wherein each [Ru] represents a moiety of formula

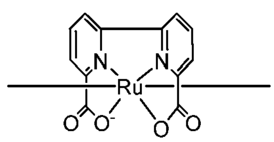

and wherein M is preferably ruthenium optionally bonded to an oxo ligand (O), an hydroxo ligand (OH) or an aqua ligand ($H_2O$); more preferably, compound of formula (Ia) as defined in claim 7.

**13.** Composition comprising the supramolecular assembly of a catalytically active material or a precursor thereof as defined in any one of the claims 1 to 7 with a solid material as defined in claim 1 or 9.

**14.** Electrode comprising a composition comprising the supramolecular assembly of a catalytically active material or a precursor thereof as defined in any one of the claims 2 to 7 with a solid material as defined in claim 2 or 9, and wherein said composition is deposited onto an electrode support as defined in claim 11.

**15.** Device comprising an electrode according to claim 14.

**16.** A process for the oxidation of water comprising the steps of:

(a) providing an electrode as defined in claim 14 wherein the catalytically active material or a precursor thereof

is as defined in any one of claims 6 to 7;
(b) when in the electrode of step (a) M is not bonded to an oxo ligand (O), an hydroxo ligand (OH) or an aqua ligand ($H_2O$); activating the electrode of step (a) such that the catalytically active material comprises at least a population of ruthenium atoms bonded to an oxo ligand (O), an hydroxo ligand (OH) or an aqua ligand ($H_2O$),
(c) contacting the electrode of step (a) or (b) comprising at least a population of ruthenium atoms bonded to an oxo ligand (O), an hydroxo ligand (OH) or an aqua ligand ($H_2O$) with water while applying a potential sufficient to provoke the production of oxygen;

wherein said process preferably satisfies at least one of the following conditions:

(i) the electrode comprises a compound of formula (Ia) or of formula (I'a) as defined in claim 7;
(ii) step (c) is carried out at neutral pH;
(iii) the process yields a current density of at least 0.2 $A/cm^2$ at a potential of 1.86 V vs RHE.

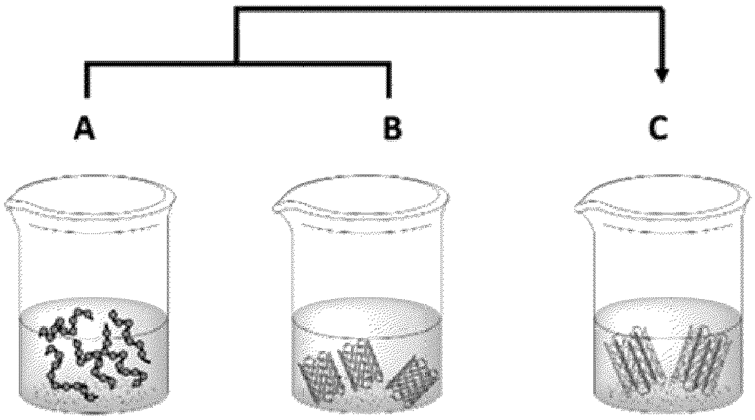


FIG. 1

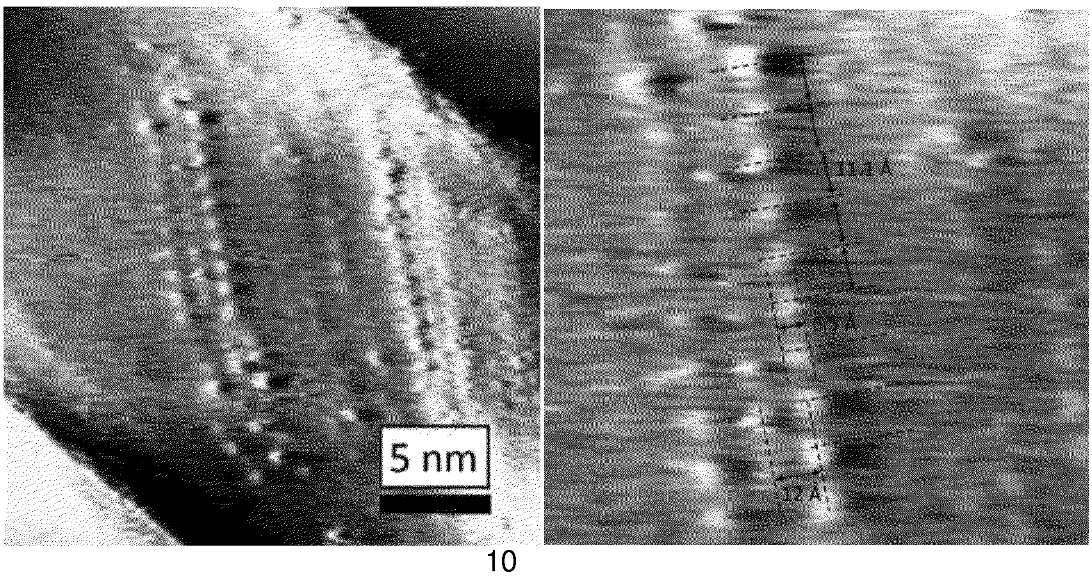


FIG. 2

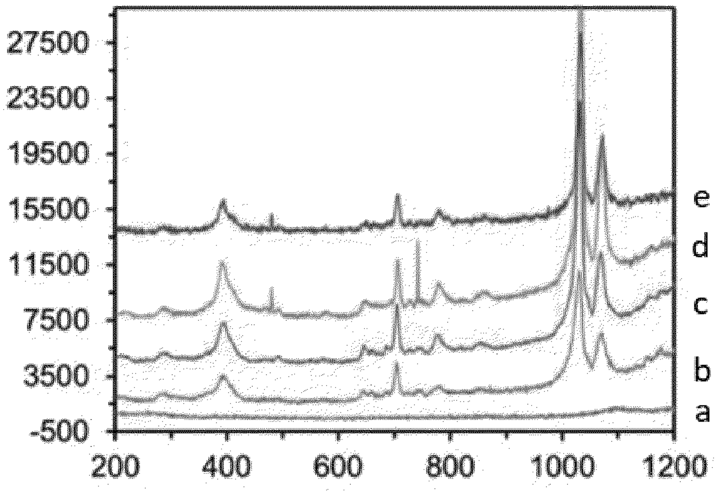


FIG. 3

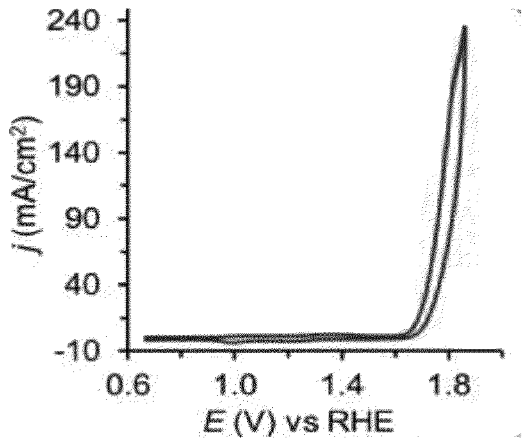


FIG. 4

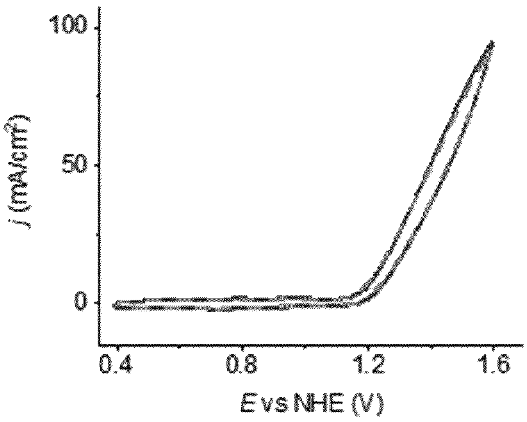


FIG. 5

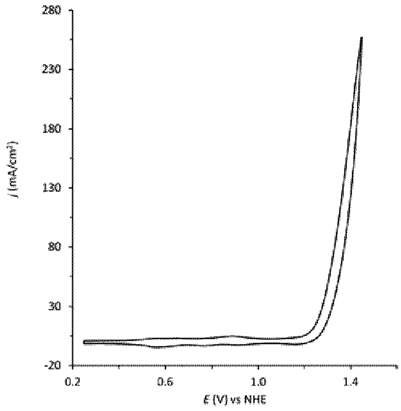


FIG. 6

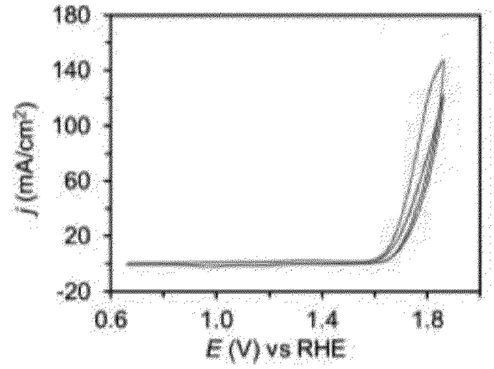


FIG. 7

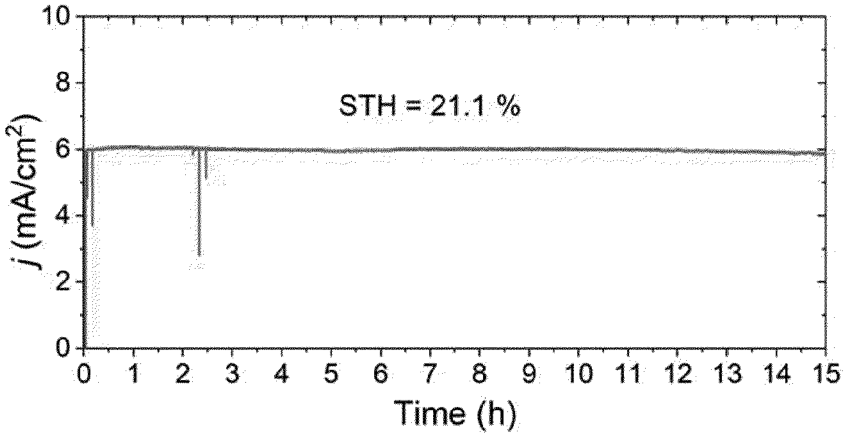


FIG. 8

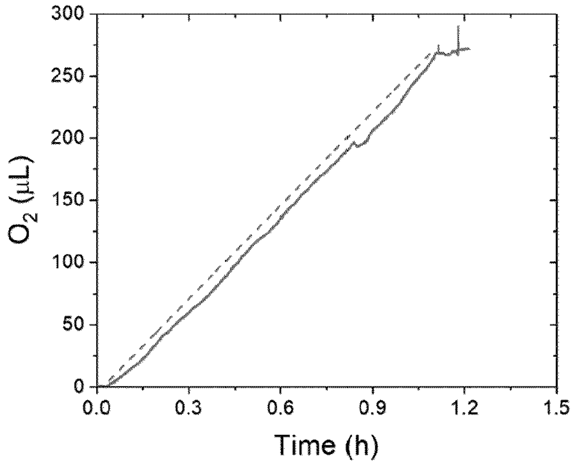


FIG. 9

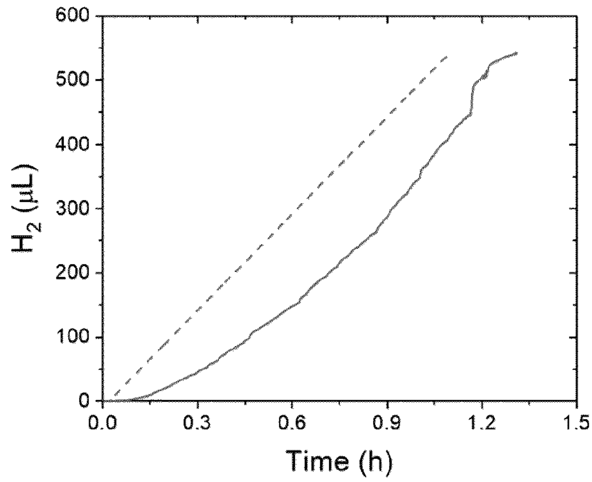


FIG. 10

Europäisches Patentamt
European Patent Office
Office européen des brevets

# EUROPEAN SEARCH REPORT

Application Number
EP 20 38 2665

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | MATHEU ROC ET AL: "Seven Coordinated Molecular Ruthenium-Water Oxidation Catalysts: A Coordination Chemistry Journey : Focus Review", CHEMICAL REVIEWS, vol. 119, no. 6, 28 February 2019 (2019-02-28), pages 3453-3471, XP055777723, US ISSN: 0009-2665, DOI: 10.1021/acs.chemrev.8b00537 | 1-16 | INV. B01J31/18 B01J31/22 B01J21/18 B01J23/14 B01J37/02 C01B3/04 |
| Y | * page 3467, paragraph 5 * * page 3465 - page 3466; figure 16; compound 15 * ----- | 1-16 | |
| Y,D | SCHULZE MARCUS ET AL: "A supramolecular ruthenium macrocycle with high catalytic activity for water oxidation that mechanistically mimics photosystem II", NATURE CHEMISTRY, vol. 8, no. 6, 2 May 2016 (2016-05-02), pages 576-583, XP055779588, London ISSN: 1755-4330, DOI: 10.1038/nchem.2503 Retrieved from the Internet: URL:http://www.nature.com/articles/nchem.2503> * abstract * * page 577, right-hand column, paragraph 2 * * page 582; figure 6 * ----- -/-- | 1-16 | TECHNICAL FIELDS SEARCHED (IPC) B01J C01C C01B |

The present search report has been drawn up for all claims

| Place of search | Date of completion of the search | Examiner |
|---|---|---|
| Munich | 26 February 2021 | Goebel, Matthias |

1

EPO FORM 1503 03.82 (P04C01)

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

page 1 of 3

Europäisches Patentamt
European Patent Office
Office européen des brevets

# EUROPEAN SEARCH REPORT

Application Number
EP 20 38 2665

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | YU FENGSHOU ET AL: "Control over Electrochemical Water Oxidation Catalysis by Preorganization of Molecular Ruthenium Catalysts in Self-Assembled Nanospheres", ANGEWANDTE CHEMIE INTERNATIONAL EDITION, vol. 57, no. 35, 5 July 2018 (2018-07-05), pages 11247-11251, XP055777728, ISSN: 1433-7851, DOI: 10.1002/anie.201805244 Retrieved from the Internet: URL:https://api.wiley.com/onlinelibrary/tdm/v1/articles/10.1002%2Fanie.201805244> * Scheme 1 * * figures 1,3 * ----- | 1-16 | |
| X | WANG LEI ET AL: "Towards efficient and robust anodes for water splitting: Immobilization of Ru catalysts on carbon electrode and hematite by in situ polymerization", CATALYSIS TODAY, ELSEVIER, AMSTERDAM, NL, vol. 290, 25 July 2016 (2016-07-25), pages 73-77, XP085028820, ISSN: 0920-5861, DOI: 10.1016/J.CATTOD.2016.07.011 * abstract * * page 74, paragraph 5; figures 1,2 * * page 76 * ----- | 1-4,6, 8-16 | TECHNICAL FIELDS SEARCHED (IPC) |

-/--

The present search report has been drawn up for all claims

1

| Place of search | Date of completion of the search | Examiner |
|---|---|---|
| Munich | 26 February 2021 | Goebel, Matthias |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 20 38 2665

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y,D | CREUS JORDI ET AL: "A Million Turnover Molecular Anode for Catalytic Water Oxidation", ANGEWANDTE CHEMIE INTERNATIONAL EDITION, vol. 55, no. 49, 7 November 2016 (2016-11-07), pages 15382-15386, XP055779423, ISSN: 1433-7851, DOI: 10.1002/anie.201609167 Retrieved from the Internet: URL:https://api.wiley.com/onlinelibrary/tdm/v1/articles/10.1002%2Fanie.201609167> * the whole document * ----- | 1-16 | |
| X,D | FRANCÀS LAIA ET AL: "Ru-bis(pyridine)pyrazolate (bpp)-Based Water-Oxidation Catalysts Anchored on TiO 2 : The Importance of the Nature and Position of the Anchoring Group", CHEMISTRY A EUROPEAN JOURNAL, vol. 22, no. 15, 26 February 2016 (2016-02-26), pages 5261-5268, XP055779162, DE ISSN: 0947-6539, DOI: 10.1002/chem.201504015 Retrieved from the Internet: URL:https://api.wiley.com/onlinelibrary/tdm/v1/articles/10.1002%2Fchem.201504015> * Scheme 1; page 5266 - page 5267; figures 5,6; compounds 12b, 18b * * abstract * * page 5264 * ----- | 1-4,6,8, 10-16 | TECHNICAL FIELDS SEARCHED (IPC) |
| X | WO 2006/060039 A1 (VIRGINIA TECH INTELL PROP [US]) 8 June 2006 (2006-06-08) * page 10, line 14 - page 11, line 22; figure 1 * ----- | 1-4,6,8, 10-15 | |

1

The present search report has been drawn up for all claims

| Place of search | Date of completion of the search | Examiner |
|---|---|---|
| Munich | 26 February 2021 | Goebel, Matthias |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 3 of 3

## ANNEX TO THE EUROPEAN SEARCH REPORT ON EUROPEAN PATENT APPLICATION NO. EP 20 38 2665

This annex lists the patent family members relating to the patent documents cited in the above-mentioned European search report. The members are as contained in the European Patent Office EDP file on
The European Patent Office is in no way liable for these particulars which are merely given for the purpose of information.

26-02-2021

| Patent document cited in search report | Publication date | Patent family member(s) | Publication date |
|---|---|---|---|
| WO 2006060039 A1 | 08-06-2006 | AU 2005310262 A1 | 08-06-2006 |
| | | CA 2589027 A1 | 08-06-2006 |
| | | EP 1836124 A1 | 26-09-2007 |
| | | US 2006120954 A1 | 08-06-2006 |
| | | US 2006286027 A1 | 21-12-2006 |
| | | WO 2006060039 A1 | 08-06-2006 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **MATHEU.** *Chem. Rev.,* 2019, vol. 119, 3453-3471
- **CHEN.** *J. Am. Chem. Soc.,* 2009, vol. 131, 15580-15581
- **JACKSON.** *J. Am. Chem. Soc.,* 2018, vol. 140, 1004-1010
- **FRANCÀS et al.** *Chem. Eur. J.,* 2016, vol. 22, 5261-5268
- **CREUS.** *Angew. Chem. Int. Ed.,* 2016, vol. 55, 15382-15386
- *Chem. Soc. Rev.,* 2017, vol. 46, 6099-6110
- *J. Mater. Chem. A,* 2019, vol. 7 (14971-15005), 14977
- *Inorg. Chem.,* 2018, vol. 57 (1757-1765), 1758
- **M. SCHULZE ; V. KUNZ ; P. D. FRISCHMANN ; F. WÜRTHNER.** *Nat. Chem.,* 2016, vol. 8, 576-583
- **MATHEU, R. et al.** *Chem. Rev.,* 2019, vol. 119, 3453-3471
- **CHEN, Z et al.** *J. Am. Chem. Soc.,* 2009, vol. 131, 15580-15581
- **JACKSON, M. N. et al.** *J. Am. Chem. Soc.,* 2018, vol. 140, 1004-1010
- **FRANCÀS, L. et al.** *Chem. Eur. J.,* 2016, vol. 22, 5261-5268
- **CREUS, J. et al.** *Angew. Chem. Int. Ed.,* 2016, vol. 55, 15382-15386
- **SCHULZE, M.** *Nat. Chem.,* 2016, vol. 8, 576-583